# EUROPEAN PATENT APPLICATION

(11) **EP 4 753 137 A1**
(43) Date of publication of application: **03.06.2026**
(21) Application number: 24845388.8
(22) Date of filing: 09.07.2024
(51) Int. Cl.: H02M 7/48

(54) **ELECTRIC POWER CONVERTING DEVICE**

(30) Priority: 27.07.2023 JP 2023122830
(71) Applicant: Panasonic Intellectual Property Management Co., Ltd., Kadoma-shi, Osaka 571-0057 (JP)
(72) Inventor: SEKIWA, Masashi, kadoma-shi, Osaka 571-0057 (JP); KAMON, Yutaka, kadoma-shi, Osaka 571-0057 (JP); HIGASHIYAMA, Koji, kadoma-shi, Osaka 571-0057 (JP)
(74) Representative: Novagraaf International SA
(86) International application number: PCT/JP2024/024758
(87) International publication number: WO 2025/023007

(57) **Abstract**

Disclosed herein is a technique for reducing current distortion in a power converter. In a power converter (100), a controller (50) performs either a first control operation or a second control operation in an overlap period in which resonant currents, passing respectively through two or more switches (8), flow simultaneously. The first control operation includes shifting a high-level period of a control signal for at least one switch (8) out of the two or more switches (8) to prevent the resonant currents passing respectively through the two or more switches (8) from flowing simultaneously through a resonant inductor (L1). The second control operation includes shifting a high-level period of a control signal for at least one switch (8) out of the two or more switches (8) to cause respective high-level periods of control signals to be applied to the two or more switches (8), respectively, to overlap with each other for at least a predetermined period during a dead time period corresponding to each of two or more switching circuits (10) connected respectively to the two or more switches (8) which belong to a plurality of switching circuits (10).

## Description

### Technical Field

The present disclosure generally relates to a power converter, and more particularly relates to a power converter having the ability to convert DC power into AC power.

### Background Art

Patent Literature 1 discloses a power converter which includes a first DC terminal and a second DC terminal, a power converter circuit, a plurality of AC terminals, a plurality of switches, a plurality of resonant capacitors, a resonant inductor, a capacitor, and a controller. The power converter circuit includes a plurality of first switching elements and a plurality of second switching elements. In the power converter circuit, a plurality of switching circuits, in each of which one of the plurality of first switching elements and a corresponding one of the plurality of second switching elements are connected one to one in series, are connected in parallel. The plurality of switches are provided one to one for the plurality of switching circuits. Each of the plurality of switches has a first end thereof connected to a connection node between the first switching element and the second switching element of a corresponding one of the plurality of switching circuits. The plurality of switches have their respective second ends connected in common to a common connection node. In the resonant inductor, a first end of the resonant inductor is connected to the common connection node. When determining that two-phase resonant currents corresponding to two switching circuits belonging to the plurality of switching circuits should flow simultaneously through the single resonant inductor, the controller performs control of shifting respective ON periods of the first switching element and the second switching element in one switching circuit out of the two switching circuits.

The power converter disclosed in Patent Literature 1 may make soft switching with more reliability.

### Citation List

### Patent Literature

Patent Literature 1: WO 2023/074636 A1

### Summary of Invention

In the power converter of Patent Literature 1, a load current, flowing through an AC terminal connected to a connection node between a first switching element and a second switching element which have been subjected to the control of shifting the respective ON periods, sometimes comes to have increased current distortion.

An object of the present disclosure is to provide a power converter having the ability to reduce the current distortion.

A power converter according to an aspect of the present disclosure includes a first DC terminal and a second DC terminal, a power converter circuit, a plurality of AC terminals, a plurality of switches, a plurality of resonant capacitors, a resonant inductor, a regenerative capacitor, and a controller. The power converter circuit includes a plurality of first switching elements and a plurality of second switching elements. In the power converter circuit, a plurality of switching circuits, in each of which one of the plurality of first switching elements and a corresponding one of the plurality of second switching elements are connected one to one in series, are connected to each other in parallel. In the power converter circuit, the plurality of first switching elements are connected to the first DC terminal, and the plurality of second switching elements are connected to the second DC terminal. The plurality of AC terminals are provided one to one for the plurality of switching circuits. Each of the plurality of AC terminals is connected to a connection node between the first switching element and the second switching element of a corresponding one of the plurality of switching circuits. The plurality of switches are provided one to one for the plurality of switching circuits. Each of the plurality of switches has a first end and a second end. Each of the plurality of switches has the first end thereof connected to the connection node between the first switching element and the second switching element of a corresponding one of the plurality of switching circuits. The plurality of switches have the respective second ends thereof connected in common to a common connection node. The plurality of resonant capacitors are provided one to one for the plurality of switches. Each of the plurality of resonant capacitors is connected between the first end of a corresponding one of the plurality of switches and the second DC terminal. The resonant inductor has a first end and a second end. In the resonant inductor L1, the first end of the resonant inductor is connected to the common connection node. The regenerative capacitor has a third end and a fourth end. In the regenerative capacitor, the third end of the regenerative capacitor is connected to either the first DC terminal or the second DC terminal. The controller applies a control signal, of which a potential level alternates between high level and low level, to each of the plurality of first switching elements, the plurality of second switching elements, and the plurality of switches. The controller sets a dead time period between a high-level period of the control signal for the first switching element and a high-level period of the control signal for the second switching element with respect to each of the plurality of switching circuits. The controller sets a high-level period of the control signal for each of the plurality of switches based on the dead time period for a corresponding one of the plurality of switching circuits. The controller is configured to, when determining that resonant currents, passing respectively through two or more switches belonging to the plurality of switches, should be going to flow simultaneously through the resonant inductor, perform either a first control operation or a second control operation based on an overlap period in which the resonant currents passing respectively through the two or more switches flow simultaneously. The first control operation is the operation of shifting the high-level period of the control signal for at least one switch out of the two or more switches to prevent the resonant currents passing respectively through the two or more switches from flowing simultaneously through the resonant inductor. The second control operation is the operation of shifting the high-level period of the control signal for at least one switch out of the two or more switches to cause the respective high-level periods of the control signals to be applied to the two or more switches, respectively, to overlap with each other for at least a predetermined period during a dead time period corresponding to each of two or more switching circuits connected respectively to the two or more switches which belong to the plurality of switching circuits.

A power converter according to the present disclosure achieves the advantage of enabling the current distortion to be reduced.

### Brief Description of Drawings

[FIG. 1] FIG. 1 is a circuit diagram of a system including a power converter according to a first embodiment;
[FIG. 2] FIG. 2 illustrates how the power converter according to the first embodiment operates in a situation where its controller has performed a basic operation when a load current > 0 and a charging operation is performed on its resonant capacitor;
[FIG. 3] FIG. 3 also illustrates how the power converter according to the first embodiment operates in the situation where its controller has performed the basic operation when the load current > 0 and the charging operation is performed on its resonant capacitor;
[FIG. 4] FIG. 4 also illustrates how the power converter according to the first embodiment operates in the situation where its controller has performed the basic operation when the load current > 0 and the charging operation is performed on its resonant capacitor;
[FIG. 5] FIG. 5 shows how duties and load currents, respectively corresponding to three-phase voltage instructions in an AC load connected to a plurality of AC terminals of the power converter according to the first embodiment, change with time;
[FIG. 6] FIG. 6 shows a first current threshold value and a second current threshold value for use in the controller of the power converter according to the first embodiment;
[FIG. 7] FIG. 7 illustrates how the power converter according to the first embodiment operates in a situation where its controller has performed the basic operation when the load current > 0 and a discharging operation is performed on its resonant capacitor;
[FIG. 8] FIG. 8 also illustrates how the power converter according to the first embodiment operates in a situation where its controller has performed the basic operation when the load current < 0 and the discharging operation is performed on its resonant capacitor;
[FIG. 9] FIG. 9 illustrates how the power converter according to the first embodiment operates in a situation where its controller has performed the basic operation when the load current < 0 and the charging operation is performed on its resonant capacitor;
[FIG. 10] FIG. 10 is a timing chart showing an exemplary boundary condition between a situation where currents flowing through a resonant inductor do not overlap with each other (i.e., do not flow simultaneously) and a situation where the currents flowing through the resonant inductor overlap with each other (i.e., flow simultaneously) in the power converter according to the first embodiment;
[FIG. 11] FIG. 11 is a timing chart showing an exemplary boundary condition between a situation where a U-phase resonant current and a V-phase resonant current do not overlap with each other (i.e., do not flow simultaneously) and a situation where the U-phase resonant current and the V-phase resonant current overlap with each other (i.e., flow simultaneously) in the power converter according to the first embodiment;
[FIG. 12] FIG. 12 is a timing chart illustrating how the power converter according to the first embodiment operates in a situation where its controller performs a first control operation;
[FIG. 13] FIG. 13 is a waveform diagram of a load current in the power converter according to the first embodiment;
[FIG. 14] FIG. 14 is a timing chart illustrating how the power converter according to the first embodiment operates in a situation where its controller performs a second control operation;
[FIG. 15] FIG. 15 is a timing chart illustrating how a power converter according to a second embodiment operates in a situation where its controller performs a first control operation;
[FIG. 16] FIG. 16 is a timing chart illustrating how the power converter according to the second embodiment operates in a situation where its controller performs a second control operation;
[FIG. 17] FIG. 17 is a timing chart illustrating how a power converter according to a third embodiment operates in a situation where its controller performs a first control operation;
[FIG. 18] FIG. 18 is a timing chart illustrating how the power converter according to the third embodiment operates in a situation where its controller performs a second control operation;
[FIG. 19] FIG. 19 is a circuit diagram of a system including a power converter according to a fourth embodiment;
[FIG. 20] FIG. 20 is a circuit diagram of a system including a power converter according to a fifth embodiment;
[FIG. 21] FIG. 21 is a circuit diagram of a system including a power converter according to a sixth embodiment;
[FIG. 22] FIG. 22 is a circuit diagram of a system including a power converter according to a seventh embodiment;
[FIG. 23] FIG. 23 is a circuit diagram of a system including a power converter according to an eighth embodiment;
[FIG. 24] FIG. 24 is a circuit diagram of a system including a power converter according to a ninth embodiment;
[FIG. 25] FIG. 25 is a circuit diagram of a system including a power converter according to a tenth embodiment;
[FIG. 26] FIG. 26 is a circuit diagram of a system including a power converter according to an eleventh embodiment;
[FIG. 27] FIG. 27 is a timing chart illustrating how a power converter according to a first example operates in a situation where its controller performs a second control operation;
[FIG. 28] FIG. 28 is a timing chart illustrating how the power converter according to the first example operates in a situation where its controller performs a first control operation;
[FIG. 29] FIG. 29 is a timing chart illustrating how a power converter according to a second example operates in a situation where its controller performs the second control operation;
[FIG. 30] FIG. 30 is a timing chart illustrating how the power converter according to the second example operates in a situation where its controller performs the first control operation;
[FIG. 31] FIG. 31 is a timing chart illustrating how a power converter according to a third example operates in a situation where its controller performs the second control operation; and
[FIG. 32] FIG. 32 is a timing chart illustrating how the power converter according to the third example operates in a situation where its controller performs the first control operation.

### Description of Embodiments

### (First embodiment)

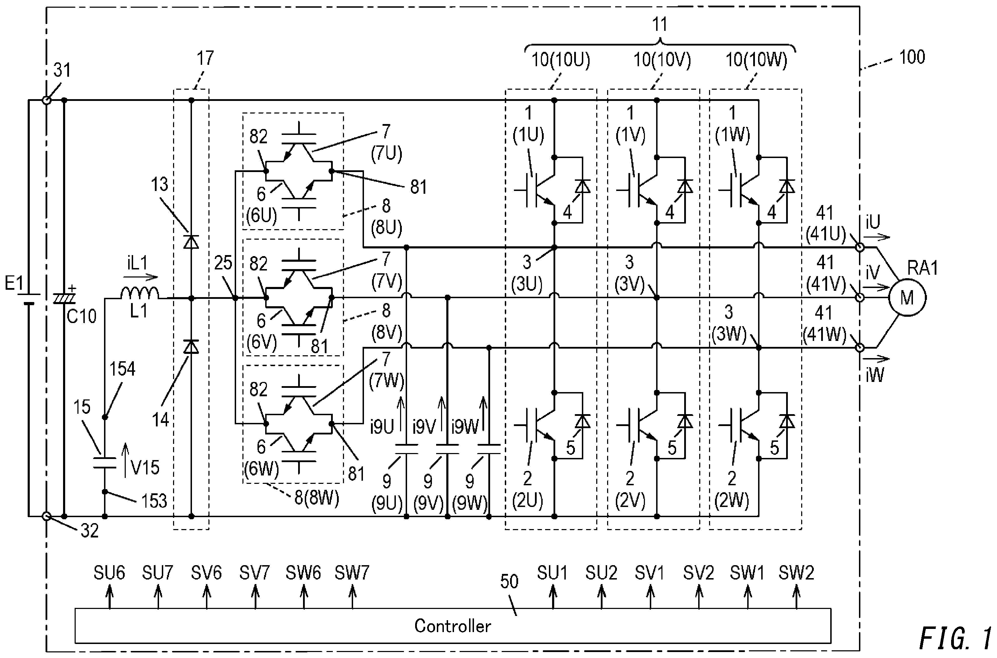

A power converter 100 according to a first embodiment will now be described with reference to FIGS. 1-14.

### (1) Overall configuration for power converter

FIG. 1 is a circuit diagram of a system including a power converter 100 according to the first embodiment. The power converter 100 includes a first DC terminal 31 and a second DC terminal 32, and a plurality of (e.g., three) AC terminals 41 as shown in FIG. 1, for example. A DC power supply E1 is connected between the first DC terminal 31 and the second DC terminal 32. An AC load RA1 is connected to the plurality of AC terminals 41. The AC load RA1 may be, for example, a three-phase servo motor. The power converter 100 converts the DC output of the DC power supply E1 into AC power and outputs the AC power to the AC load RA1. The DC power supply E1 may include, for example, a solar cell or a fuel cell. The DC power supply E1 may include a DC-DC converter. In the power converter 100, if the plurality of AC terminals 41 are three AC terminals 41, then the AC power may be, for example, three-phase AC power having U-, V-, and W-phases.

The power converter 100 includes a power converter circuit 11, a plurality of (e.g., three) switches 8, a plurality of (e.g., three) resonant capacitors 9, a resonant inductor L1, a regenerative capacitor 15, and a controller 50. The power converter 100 further includes a protection circuit 17 and a capacitor C10. Each of the plurality of switches 8 may be, for example, a bidirectional switch.

The power converter circuit 11 includes a plurality of (e.g., three) first switching elements 1 and a plurality of (e.g., three) second switching elements 2. In the power converter circuit 11, a plurality of (e.g., three) switching circuits 10, in each of which one of the plurality of first switching elements 1 and a corresponding one of the plurality of second switching elements 2 are connected one to one in series, are connected in parallel. In the power converter circuit 11, the plurality of first switching elements 1 are connected to the first DC terminal 31 and the plurality of second switching elements 2 are connected to the second DC terminal 32. The plurality of AC terminals 41 are provided one to one for the plurality of switching circuits 10. Each of the plurality of AC terminals 41 is connected to a connection node 3 between the first switching element 1 and the second switching element 2 of a corresponding one of the plurality of switching circuits 10. The plurality of switches 8 are provided one to one for the plurality of switching circuits 10. Each of the plurality of switches 8 has a first end 81 thereof connected to the connection node 3 between the first switching element 1 and the second switching element 2 of a corresponding one of the plurality of switching circuits 10. The plurality of switches 8 have their respective second ends 82 connected in common to a common connection node 25. The plurality of resonant capacitors 9 are provided one to one for the plurality of switches 8. Each of the plurality of resonant capacitors 9 is connected between the first end 81 of a corresponding one of the plurality of switches 8 and the second DC terminal 32. The resonant inductor L1 has a first end and a second end. In the resonant inductor L1, the first end of the resonant inductor L1 is connected to the common connection node 25. The regenerative capacitor 15 has a third end 153 and a fourth end 154. In the regenerative capacitor 15, the third end 153 thereof is connected to the second DC terminal 32 and the fourth end 154 thereof is connected to the common connection node 25 via the resonant inductor L1. The controller 50 controls the plurality of first switching elements 1, the plurality of second switching elements 2, and the plurality of switches 8.

### (2) Details of power converter

In the following description, as for the plurality of switching circuits 10, the switching circuits 10 for the U-, V-, and W-phases will be hereinafter referred to as a "switching circuit 10U," a "switching circuit 10V," and a "switching circuit 10W," respectively, for the sake of convenience of description. Also, in the following description, the first switching element 1 and second switching element 2 of the switching circuit 10U will be hereinafter referred to as a "first switching element 1U" and a "second switching element 2U," respectively. In the same way, in the following description, the first switching element 1 and second switching element 2 of the switching circuit 10V will be hereinafter referred to as a "first switching element 1V" and a "second switching element 2V," respectively. In the same way, in the following description, the first switching element 1 and second switching element 2 of the switching circuit 10W will be hereinafter referred to as a "first switching element 1W" and a "second switching element 2W," respectively. Furthermore, in the following description, the connection node 3 between the first switching element 1U and the second switching element 2U will be hereinafter referred to as a "connection node 3U," the connection node 3 between the first switching element 1V and the second switching element 2V will be hereinafter referred to as a "connection node 3V," and the connection node 3 between the first switching element 1W and the second switching element 2W will be hereinafter referred to as a "connection node 3W." Furthermore, in the following description, the AC terminal 41 connected to the connection node 3U will be hereinafter referred to as an "AC terminal 41U," the AC terminal 41 connected to the connection node 3V will be hereinafter referred to as an "AC terminal 41V," and the AC terminal 41 connected to the connection node 3W will be hereinafter referred to as an "AC terminal 41W." Furthermore, in the following description, the resonant capacitor 9 connected to the second switching element 2U in parallel will be hereinafter referred to as a "resonant capacitor 9U," the resonant capacitor 9 connected to the second switching element 2V in parallel will be hereinafter referred to as a "resonant capacitor 9V," and the resonant capacitor 9 connected to the second switching element 2W in parallel will be hereinafter referred to as a "resonant capacitor 9W." Furthermore, in the following description, the switch 8 connected to the connection node 3U will be hereinafter referred to as a "switch 8U," the switch 8 connected to the connection node 3V will be hereinafter referred to as a "switch 8V," and the switch 8 connected to the connection node 3W will be hereinafter referred to as a "switch 8W."

In the power converter 100, the higher-potential output terminal (positive electrode) of the DC power supply E1 is connected to the first DC terminal 31, and the lower-potential output terminal (negative electrode) of the DC power supply E1 is connected to the second DC terminal 32. Also, in the power converter 100, the U-, V-, and W-phase terminals of the AC load RA1, for example, are connected to the three AC terminals 41U, 41V, and 41W, respectively.

In the power converter circuit 11, each of the plurality of (e.g., three) first switching elements 1 and the plurality of (e.g., three) second switching elements 2 has a control terminal, a first main terminal, and a second main terminal. The respective control terminals of the plurality of first switching elements 1 and the plurality of second switching elements 2 are connected to the controller 50. In each of the plurality of switching circuits 10 of the power converter 100, the first main terminal of the first switching element 1 is connected to the first DC terminal 31, the second main terminal of the first switching element 1 is connected to the first main terminal of the second switching element 2, and the second main terminal of the second switching element 2 is connected to the second DC terminal 32. In each of the plurality of switching circuits 10, the first switching element 1 is a high-side switching element (P-side switching element) and the second switching element 2 is a low-side switching element (N-side switching element). Each of the plurality of first switching elements 1 and the plurality of second switching elements 2 may be, for example, an insulated gate bipolar transistor (IGBT). Thus, in each of the plurality of first switching elements 1 and the plurality of second switching elements 2, the control terminal, the first main terminal, and the second main terminal thereof are a gate terminal, a collector terminal, and an emitter terminal, respectively.

The power converter circuit 11 further includes a plurality of (e.g., three) first diodes 4 which are connected one to one to the plurality of (e.g., three) first switching elements 1 in antiparallel and a plurality of (e.g., three) second diodes 5 which are connected one to one to the plurality of (e.g., three) second switching elements 2 in antiparallel. In each of the plurality of first diodes 4, the first diode 4 has its anode connected to the second main terminal (emitter terminal) of the first switching element 1 corresponding to the first diode 4, and has its cathode connected to the first main terminal (collector terminal) of the first switching element 1 corresponding to the first diode 4. In each of the plurality of second diodes 5, the second diode 5 has its anode connected to the second main terminal (emitter terminal) of the second switching element 2 corresponding to the second diode 5, and has its cathode connected to the first main terminal (collector terminal) of the second switching element 2 corresponding to the second diode 5.

The U-phase terminal of the AC load RA1, for example, may be connected to the connection node 3U between the first switching element 1U and the second switching element 2U via the AC terminal 41U. The V-phase of the AC load RA1, for example, may be connected to the connection node 3V between the first switching element 1V and the second switching element 2V via the AC terminal 41V. The W-phase of the AC load RA1, for example, may be connected to the connection node 3W between the first switching element 1W and the second switching element 2W via the AC terminal 41W.

The plurality of resonant capacitors 9 are provided one to one for the plurality of switches 8. Each of the plurality of resonant capacitors 9 is connected between the first end of a corresponding one of the switches 8 and the second DC terminal 32. The power converter 100 includes a plurality of resonant circuits. The plurality of resonant circuits includes a resonant circuit having the resonant capacitor 9U and the resonant inductor L1, a resonant circuit having the resonant capacitor 9V and the resonant inductor L1, and a resonant circuit having the resonant capacitor 9W and the resonant inductor L1. The plurality of resonant circuits shares the resonant inductor L1 in common.

Each of the plurality of switches 8 includes, for example, two IGBTs, namely, a first IGBT 6 and a second IGBT 7, which are connected in antiparallel. In each of the plurality of switches 8, a collector terminal of the first IGBT 6 and an emitter terminal of the second IGBT 7 are connected to each other, and an emitter terminal of the first IGBT 6 and a collector terminal of the second IGBT 7 are connected to each other. In each of the plurality of switches 8, the emitter terminal of the first IGBT 6 is connected to the connection node 3 of a switching circuit 10 corresponding to the switch 8 including the first IGBT 6. In each of the plurality of switches 8, the collector terminal of the second IGBT 7 is connected to the connection node 3 of a switching circuit 10 corresponding to the switch 8 including the second IGBT 7. The switch 8U is connected to the connection node 3U between the first switching element 1U and the second switching element 2U. The switch 8V is connected to the connection node 3V between the first switching element 1V and the second switching element 2V. The switch 8W is connected to the connection node 3W between the first switching element 1W and the second switching element 2W. In the following description, the first IGBT 6 and second IGBT 7 of the switch 8U will be hereinafter referred to as a "first IGBT 6U" and a "second IGBT 7U," respectively, the first IGBT 6 and second IGBT 7 of the switch 8V will be hereinafter referred to as a "first IGBT 6V" and a "second IGBT 7V," respectively, and the first IGBT 6 and second IGBT 7 of the switch 8W will be hereinafter referred to as a "first IGBT 6W" and a "second IGBT 7W," respectively, for the sake of convenience of description.

The plurality of switches 8 are controlled by the controller 50. In other words, the first IGBT 6U, the second IGBT 7U, the first IGBT 6V, the second IGBT 7V, the first IGBT 6W, and the second IGBT 7W are controlled by the controller 50.

The resonant inductor L1 has a first end and a second end. In the resonant inductor L1, the first end of the resonant inductor L1 is connected to the common connection node 25 and the second end of the resonant inductor L1 is connected to the fourth end 154 of the regenerative capacitor 15.

The regenerative capacitor 15 is connected between the second end of the resonant inductor L1 and the second DC terminal 32. The regenerative capacitor 15 may be, for example, a film capacitor.

The protection circuit 17 includes a third diode 13 and a fourth diode 14. The third diode 13 is connected between the common connection node 25 and the first DC terminal 31. The third diode 13 has its anode connected to the common connection node 25. The third diode 13 has its cathode connected to the first DC terminal 31. The fourth diode 14 is connected between the common connection node 25 and the second DC terminal 32. The fourth diode 14 has its anode connected to the second DC terminal 32. The fourth diode 14 has its cathode connected to the common connection node 25. Thus, the fourth diode 14 is connected to the third diode 13 in series.

The capacitor C10 is connected between the first DC terminal 31 and the second DC terminal 32 and is connected to the power converter circuit 11 in parallel. The capacitor C10 may be, for example, an electrolytic capacitor.

The controller 50 controls the plurality of first switching elements 1, the plurality of second switching elements 2, and the plurality of switches 8. The agent that performs the functions of the controller 50 includes a computer system. The computer system includes a single or a plurality of computers. The computer system includes a processor and a memory as principal hardware components thereof. The computer system serves as the agent that performs the functions of the controller 50 according to the present disclosure by making the processor execute a program stored in the memory of the computer system. The program may be stored in advance in the memory of the computer system. Alternatively, the program may also be downloaded through a telecommunications line or be distributed after having been recorded in a non-transitory storage medium such as a memory card, an optical disc, or a hard disk drive (magnetic disk), any of which is readable for the computer system. The processor of the computer system may be made up of a single or a plurality of electronic circuits including a semiconductor integrated circuit (IC) or a large-scale integrated circuit (LSI). Those electronic circuits may be either integrated together on a single chip or distributed on multiple chips, whichever is appropriate. Those multiple chips may be aggregated together in a single device or distributed in multiple devices without limitation.

The controller 50 outputs control signals SU1, SV1, SW1 for controlling the ON/OFF states of the plurality of first switching elements 1U, 1V, 1W, respectively. Each of the control signals SU1, SV1, SW1 may be, for example, a pulse width modulation (PWM) signal having, for example, a potential level that alternates between a first potential level (hereinafter referred to as a "low level") and a second potential level (hereinafter referred to as a "high level") higher than the first potential level. The first switching elements 1U, 1V, 1W respectively turn ON when the control signals SU1, SV1, SW1 have high level and respectively turn OFF when the control signals SU1, SV1, SW1 have low level. In addition, the controller 50 also outputs control signals SU2, SV2, SW2 for controlling the ON/OFF states of the plurality of second switching elements 2U, 2V, 2W, respectively. Each of the control signals SU2, SV2, SW2 may be, for example, a PWM signal having, for example, a potential level that alternates between the first potential level (hereinafter referred to as a "low level") and the second potential level (hereinafter referred to as a "high level") higher than the first potential level. The second switching elements 2U, 2V, 2W respectively turn ON when the control signals SU2, SV2, SW2 have high level and respectively turn OFF when the control signals SU2, SV2, SW2 have low level.

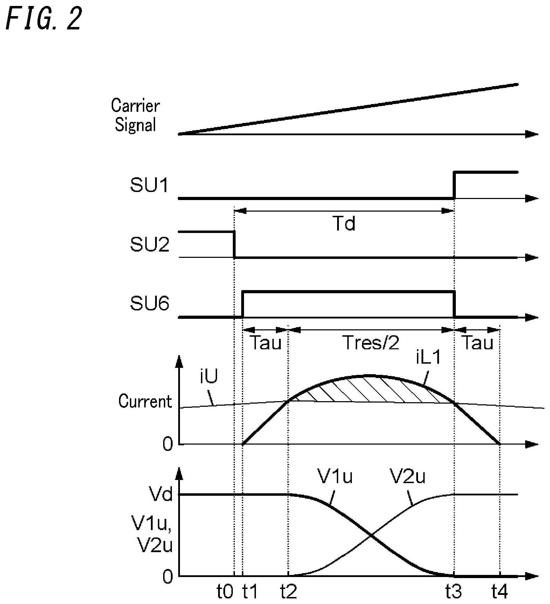

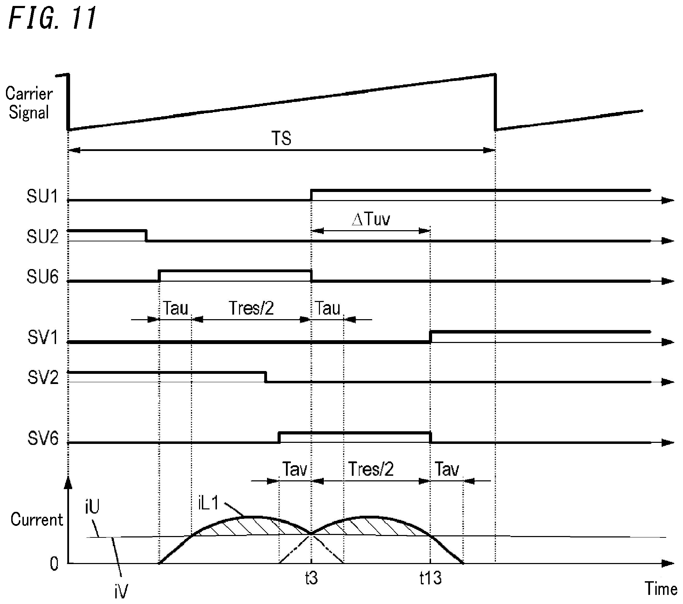

The controller 50 generates, using a carrier signal (refer to FIGS. 2 and 11) having a saw-tooth waveform, the control signals SU1, SV1, SW1 for the plurality of first switching elements 1U, 1V, 1W, respectively, and the control signals SU2, SV2, SW2 for the plurality of second switching elements 2U, 2V, 2W, respectively. More specifically, the controller 50 generates, based on at least the carrier signal and a U-phase voltage instruction, the control signals SU1, SU2 to be applied to the first switching element 1U and the second switching element 2U, respectively. Also, the controller 50 generates, based on at least the carrier signal and a V-phase voltage instruction, the control signals SV1, SV2 to be applied to the first switching element 1V and the second switching element 2V, respectively. Furthermore, the controller 50 generates, based on at least the carrier signal and a W-phase voltage instruction, the control signals SW1, SW2 to be applied to the first switching element 1W and the second switching element 2W, respectively. The U-phase voltage instruction, the V-phase voltage instruction, and the W-phase voltage instruction may be, for example, sinusoidal wave signals, of which the phases are different from each other by 120 degrees and of which the value (voltage instruction value) changes with time. Note that the waveform of the carrier signal does not have to be the saw-tooth waveform but may also be a triangular waveform or a mirror-reversed version of the saw-tooth waveform shown in FIG. 11. Also, the U-phase voltage instruction, the V-phase voltage instruction, and the W-phase voltage instruction each have one cycle of the same length. In addition, one cycle of the U-phase voltage instruction, the V-phase voltage instruction, and the W-phase voltage instruction is longer than one cycle of the carrier signal.

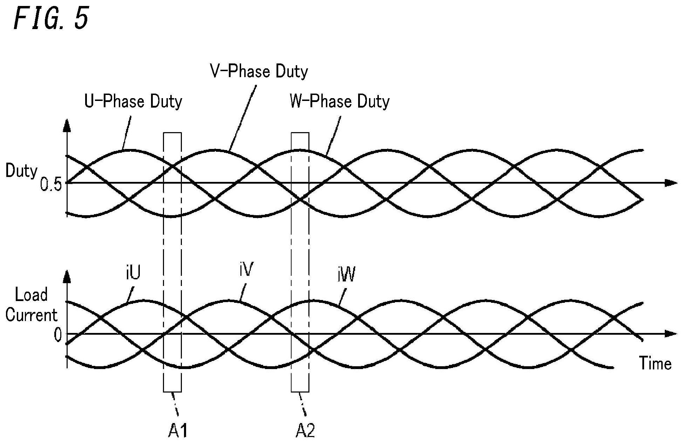

The duty of the control signals SU1, SU2 to be applied from the controller 50 to the first switching element 1U and the second switching element 2U, respectively, varies in accordance with the U-phase voltage instruction. In FIG. 5 to be referred to later, the duty of the control signal SU1 is shown as a "U-phase duty." The controller 50 (refer to FIG. 1) generates the control signal SU1 to be applied to the first switching element 1U by comparing the U-phase voltage instruction with the carrier signal. The controller 50 generates the control signal SU2 to be applied to the second switching element 2U by inverting the control signal SU1 to be applied to the first switching element 1U. In addition, to prevent the respective ON periods of the first switching element 1U and the second switching element 2U from overlapping with each other, the controller 50 sets a dead time period Td (refer to FIG. 2) between a high-level period of the control signal SU1 and a high-level period of the control signal SU2.

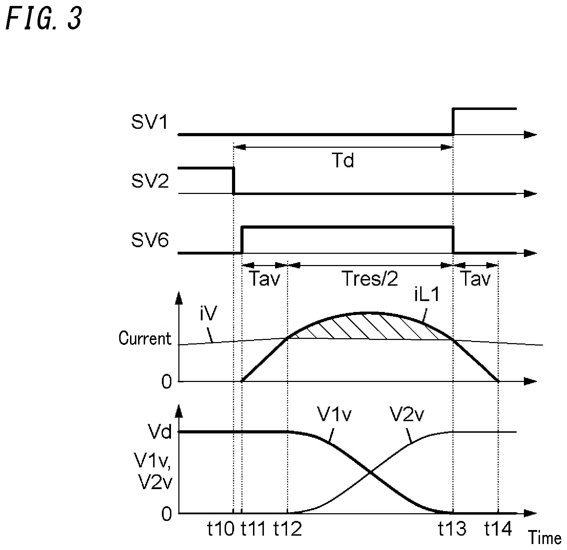

The duty of the control signals SV1, SV2 to be applied from the controller 50 to the first switching element 1V and the second switching element 2V, respectively, varies in accordance with the V-phase voltage instruction. In FIG. 5, the duty of the control signal SV1 is shown as a "V-phase duty." The controller 50 (refer to FIG. 1) generates the control signal SV1 to be applied to the first switching element 1V by comparing the V-phase voltage instruction with the carrier signal. The controller 50 also generates the control signal SV2 to be applied to the second switching element 2V by inverting the control signal SV1 to be applied to the first switching element 1V. In addition, to prevent the respective ON periods of the first switching element 1V and the second switching element 2V from overlapping with each other, the controller 50 sets a dead time period Td (refer to FIG. 3) between a high-level period of the control signal SV1 and a high-level period of the control signal SV2.

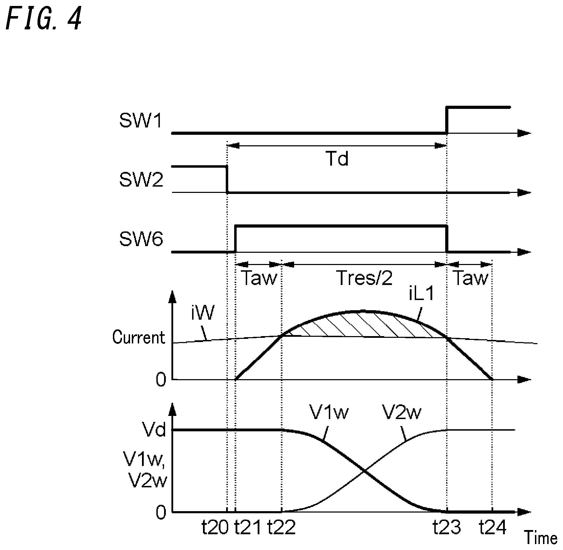

The duty of the control signals SW1, SW2 to be applied from the controller 50 to the first switching element 1W and the second switching element 2W, respectively, varies in accordance with the W-phase voltage instruction. In FIG. 5, the duty of the control signal SW1 is shown as a "W-phase duty." The controller 50 (refer to FIG. 1) generates the control signal SW1 to be applied to the first switching element 1W by comparing the W-phase voltage instruction with the carrier signal. The controller 50 generates the control signal SW2 to be applied to the second switching element 2W by inverting the control signal SW1 to be applied to the first switching element 1W. In addition, to prevent the respective ON periods of the first switching element 1W and the second switching element 2W from overlapping with each other, the controller 50 sets a dead time period Td (refer to FIG. 4) between a high-level period of the control signal SW1 and a high-level period of the control signal SW2.

The U-phase voltage instruction, the V-phase voltage instruction, and the W-phase voltage instruction may be, for example, sinusoidal wave signals, of which the phases are different from each other by 120 degrees and of which the value changes with time. Thus, the respective duties (i.e., U-, V-, and W-phase duties) of the control signals SU1, SV1, SW1 change in the form of sinusoidal waves, of which the phases are different from each other by 120 degrees, as shown in FIG. 5, for example. In the same way, the respective duties of the control signals SU2, SV2, SW2 also change in the form of sinusoidal waves, of which the phases are different from each other by 120 degrees.

The controller 50 generates the respective control signals SU1, SU2, SV1, SV2, SW1, SW2 based on the carrier signal, the respective voltage instructions, and information about the state of the AC load RA1. For example, if the AC load RA1 is a three-phase servo motor, the information about the state of the AC load RA1 may include, for example, detection values provided by a plurality of current sensors for respectively detecting output currents (hereinafter referred to as "load currents") iU, iV, iW flowing respectively through the U-, V-, and W-phases of the AC load RA1.

The plurality of switches 8, the resonant inductor L1, the plurality of resonant capacitors 9, and the regenerative capacitor 15 are provided to make zero-voltage soft switching of the plurality of first switching elements 1 and the plurality of second switching elements 2.

In this power converter 100, the controller 50 controls not only the plurality of first switching elements 1 and the plurality of second switching elements 2 of the power converter circuit 11 but also the plurality of switches 8 as well.

The controller 50 generates control signals SU6, SU7, SV6, SV7, SW6, SW7 for controlling the respective ON/OFF states of the first IGBT 6U, the second IGBT 7U, the first IGBT 6V, the second IGBT 7V, the first IGBT 6W, and the second IGBT 7W, respectively, and outputs the control signals SU6, SU7, SV6, SV7, SW6, SW7 to the respective gate terminals of the first IGBT 6U, the second IGBT 7U, the first IGBT 6V, the second IGBT 7V, the first IGBT 6W, and the second IGBT 7W.

If the first IGBT 6U is ON and the second IGBT 7U is OFF, the switch 8U allows a charging current that flows along a path passing through the regenerative capacitor 15, the resonant inductor L1, the switch 8U, and the resonant capacitor 9U in this order to pass therethrough. The charging current is a current for charging the resonant capacitor 9U with electricity. On the other hand, if the first IGBT 6U is OFF and the second IGBT 7U is ON, the switch 8U allows a discharging current that flows along a path passing through the resonant capacitor 9U, the switch 8U, the resonant inductor L1, and the regenerative capacitor 15 in this order to pass therethrough. The discharging current is a current for discharging electricity from the resonant capacitor 9U.

If the first IGBT 6V is ON and the second IGBT 7V is OFF, the switch 8V allows a charging current that flows along a path passing through the regenerative capacitor 15, the resonant inductor L1, the switch 8V, and the resonant capacitor 9V in this order to pass therethrough. The charging current is a current for charging the resonant capacitor 9V with electricity. On the other hand, if the first IGBT 6V is OFF and the second IGBT 7V is ON, the switch 8V allows a discharging current that flows along a path passing through the resonant capacitor 9V, the switch 8V, the resonant inductor L1, and the regenerative capacitor 15 in this order to pass therethrough. The discharging current is a current for discharging electricity from the resonant capacitor 9V.

If the first IGBT 6W is ON and the second IGBT 7W is OFF, the switch 8W allows a charging current that flows along a path passing through the regenerative capacitor 15, the resonant inductor L1, the switch 8W, and the resonant capacitor 9W in this order to pass therethrough. The charging current is a current for charging the resonant capacitor 9W with electricity. On the other hand, if the first IGBT 6W is OFF and the second IGBT 7W is ON, the switch 8W allows a discharging current that flows along a path passing through the resonant capacitor 9W, the switch 8W, the resonant inductor L1, and the regenerative capacitor 15 in this order to pass therethrough. The discharging current is a current for discharging electricity from the resonant capacitor 9W.

### (3) Operation of power converter

In the following description, as for a current iL1 flowing through the resonant inductor L1, if the current flows in the direction indicated by the arrow shown in FIG. 1, then the polarity of the current iL1 is supposed to be positive. On the other hand, if the current iL1 flows in the direction opposite from the one indicated by the arrow shown in FIG. 1, then the polarity of the current iL1 is supposed to be negative. In addition, in the following description, as for each of the load currents iU, iV, iW respectively flowing through the U-, V-, and W-phases of the AC load RA1, if the load current iU, iV, iW flows in the direction indicated by a corresponding one of the arrows shown in FIG. 1, then the polarity of the load current iU, iV, iW is supposed to be positive. On the other hand, if the load current iU, iV, iW flows in the direction opposite from the one indicated by the arrow shown in FIG. 1, then the polarity of the load current iU, iV, iW is supposed to be negative. Furthermore, as for each of currents i9U, i9V, i9W flowing through the resonant capacitors 9U, 9V, 9W, respectively, if the current 19U, i9V, i9W flows in the direction indicated by a corresponding one of the arrows shown in FIG. 1, then the polarity of the current 19U, 19V, i9W is supposed to be positive. On the other hand, if the current i9U, i9V, i9W flows in the direction opposite from the one indicated by the arrow shown in FIG. 1, then the polarity of the current i9U, i9V, i9W is supposed to be negative. Thus, in the case of the discharging operation of discharging electricity from the resonant capacitor 9U, 9V, 9W, the polarity of the current i9U, i9V, i9W is positive. On the other hand, in the case of the charging operation of charging the resonant capacitor 9U, 9V, 9W with electricity, the polarity of the current i9U, i9V, i9W is negative.

In this power converter 100, the first IGBT 6U of the switch 8U may turn OFF in a state where the first IGBT 6U of the switch 8U is ON and a positive current iL1 is flowing through the resonant inductor L1, for example. In that case, the current iL1 flowing through the resonant inductor L1 is regenerated to the power converter circuit 11 via the third diode 13 until the current iL1 goes zero due to the consumption of energy of the resonant inductor L1. Also, in this power converter 100, the second IGBT 7U of the switch 8U may turn OFF in a state where the second IGBT 7U of the switch 8U is ON and a negative current iL1 is flowing through the resonant inductor L1, for example. In that case, the current iL1 flows through the resonant inductor L1 along the path passing through the fourth diode 14, the resonant inductor L1, and the regenerative capacitor 15 in this order until the current iL1 goes zero due to the consumption of energy of the resonant inductor L1.

Furthermore, in this power converter 100, the first IGBT 6V of the switch 8V may turn OFF in a state where the first IGBT 6V of the switch 8V is ON and a positive current iL1 is flowing through the resonant inductor L1, for example. In that case, the current iL1 flowing through the resonant inductor L1 is regenerated to the power converter circuit 11 via the third diode 13 until the current iL1 goes zero due to the consumption of energy of the resonant inductor L1. Furthermore, in this power converter 100, the second IGBT 7V of the switch 8V may turn OFF in a state where the second IGBT 7V of the switch 8V is ON and a negative current iL1 is flowing through the resonant inductor L1, for example. In that case, the current iL1 flows through the resonant inductor L1 along the path passing through the fourth diode 14, the resonant inductor L1, and the regenerative capacitor 15 in this order until the current iL1 goes zero due to the consumption of energy of the resonant inductor L1.

Furthermore, in this power converter 100, the first IGBT 6W of the switch 8W may turn OFF in a state where the first IGBT 6W of the switch 8W is ON and a positive current iL1 is flowing through the resonant inductor L1, for example. In that case, the current iL1 flowing through the resonant inductor L1 is regenerated to the power converter circuit 11 via the third diode 13 until the current iL1 goes zero due to the consumption of energy of the resonant inductor L1. Furthermore, in this power converter 100, the second IGBT 7W of the switch 8W may turn OFF in a state where the second IGBT 7W of the switch 8W is ON and a negative current iL1 is flowing through the resonant inductor L1, for example. In that case, the current iL1 flows through the resonant inductor L1 along the path passing through the fourth diode 14, the resonant inductor L1, and the regenerative capacitor 15 in this order until the current iL1 goes zero due to the consumption of energy of the resonant inductor L1.

The controller 50 sets a dead time period Td between the high-level period of the control signal SU1, SV1, SW1 for the first switching element 1U, 1V, 1W and the high-level period of the control signal SU2, SV2, SW2 for the second switching element 2U, 2V, 2W with respect to each of the plurality of switching circuits 10. In addition, the controller 50 also sets the high-level period of a control signal for each of the plurality of switches 8 based on the dead time period Td with respect to a corresponding one of the plurality of switching circuits 10. In this case, the controller 50 sets the length of the high-level period of the control signal for each of the plurality of switches 8 as, for example, the sum of the length of a first period and the length of a second period. The length of the first period is the length of a resonant half cycle which is determined by the capacitance of the resonant capacitor 9 corresponding to the switch 8 and the inductance of the resonant inductor L1. Supposing the resonant cycle is Tres, the length of the first period is Tres/2. The end time of the first period, i.e., the point in time when the resonant half cycle ends, preferably agrees with the end time of the dead time period Td for the switching circuit 10 corresponding to the switch 8. For example, in the example shown in FIG. 2 (to be referred to later), the length of the control signal SU6 between a time t2 and a time t3 is the length of the first period. The length of the second period may be, for example, the additional time Tau which is determined by the voltage of the regenerative capacitor 15, the inductance of the resonant inductor L1, and the load current value. The length of the first period described above is an exemplary value according to an ideal design. Alternatively, the length of the first period may also be equal to or greater than 90% and equal to or less than 110% of the length Tres/2. The length of the second period described above is an exemplary value according to an ideal design. Alternatively, the length of the second period may also be equal to or greater than 90% and equal to or less than 110% of the additional time (e.g., the additional time Tau in the example shown in FIG. 2) determined by the voltage of the regenerative capacitor 15, the inductance of the resonant inductor L1, and the load current value.

Next, a basic operation of zero-voltage soft switching to be performed on each of the plurality of first switching elements 1 and the plurality of second switching elements 2 will be described with reference to FIGS. 1-9. As used herein, the "basic operation" refers to an operation to be performed when resonant currents, passing through two or more switches 8 belonging to the plurality of switches 8, are not going to flow simultaneously through the resonant inductor L1. It will be described, after the basic operation has been described, how this power converter 100 operates when the controller 50 determines that the resonant currents passing through the two or more switches 8 belonging to the plurality of switches 8 should be going to flow simultaneously.

### (3.1) Basic operation

When the zero-voltage soft switching is performed on the first switching element 1, the voltage across the first switching element 1 as the target of zero-voltage soft switching needs to be reduced to zero just before the first switching element 1 turns ON. When the zero-voltage soft switching is performed on the second switching element 2, the voltage across the second switching element 2 as the target of zero-voltage soft switching needs to be reduced to zero just before the second switching element 2 turns ON. In the following description, the switching element (which is either the first switching element 1 or the second switching element 2) designated as the target of the zero-voltage soft switching will be hereinafter referred to as a "target switching element."

The basic operation of the controller 50 changes according to the polarity (i.e., either positive or negative) of a load current flowing through the AC terminal 41 connected to the target switching element and depending on whether the charging operation or the discharging operation is performed on the resonant capacitor 9 connected to the target switching element in series or in parallel. The load current has positive polarity when flowing from the AC terminal 41 toward the AC load RA1 and has negative polarity when flowing from the AC load RA1 toward the AC terminal 41. While charging operation is performed on the resonant capacitor 9, the voltage across the resonant capacitor 9 increases. On the other hand, while the discharging operation is performed on the resonant capacitor 9, the voltage across the resonant capacitor 9 decreases. The voltage across each of the plurality of second switching elements 2 is the same as the voltage across the resonant capacitor 9 connected to the second switching element 2 in parallel.

### (3.1.1) Operation of soft-switching first switching element when load current > 0

If the target of the soft switching is a first switching element 1 (hereinafter referred to as a "target first switching element 1") and the polarity of the load current flowing through the AC terminal 41 connected to the target first switching element 1 is positive, then the controller 50 turns ON the first IGBT 6 corresponding to the target first switching element 1. In this manner, the controller 50 causes the resonant inductor L1 and resonant capacitor 9 connected to the target first switching element 1 to produce resonance, thereby charging the resonant capacitor 9 with electricity supplied from the regenerative capacitor 15 and reducing the voltage across the target first switching element 1 to zero. This allows the power converter 100 to make zero-voltage soft switching of the target first switching element 1.

FIG. 2 illustrates how the power converter 100 according to the first embodiment operates in a situation where its controller 50 has performed a basic operation when a load current > 0 and a charging operation is performed on the resonant capacitor 9. The control signals SU1, SU2 to be respectively applied from the controller 50 to the first switching element 1U and the second switching element 2U of the switching circuit 10U in a situation where the target first switching element is the first switching element 1U of the switching circuit 10U are shown in FIG. 2. In addition, the control signal SU6 to be applied from the controller 50 to the first IGBT 6U of the switch 8U, the load current iU flowing through the U-phase of the AC load RA1, the current iL1 flowing through the resonant inductor L1, the voltage V1u across the first switching element 1U, and the voltage V2u across the second switching element 2U are also shown in FIG. 2. In FIG. 2, the voltage value of the DC power supply E1 is designated by Vd.

Furthermore, the dead time period Td that the controller 50 sets to prevent the first switching element 1 and the second switching element 2 of the same phase from turning ON simultaneously is also shown in FIG. 2. Besides, an additional time Tau set by the controller 50 with respect to the control signal SU6 for the first IGBT 6U of the switch 8U is also shown in FIG. 2. The additional time Tau will be described later.

FIG. 3 also illustrates how the power converter 100 according to the first embodiment operates in the situation where its controller 50 has performed the basic operation when the load current > 0 and the charging operation is performed on the resonant capacitor 9. The control signals SV1, SV2 to be respectively applied from the controller 50 to the first switching element 1V and the second switching element 2V of the switching circuit 10V in a situation where the target first switching element is the first switching element 1V of the switching circuit 10V are also shown in FIG. 3. In addition, the control signal SV6 to be applied from the controller 50 to the first IGBT 6V of the switch 8V, the load current iV flowing through the V-phase of the AC load RA1, the current iL1 flowing through the resonant inductor L1, the voltage V1v across the first switching element 1V, and the voltage V2v across the second switching element 2V are also shown in FIG. 3. In FIG. 3, the voltage value of the DC power supply E1 is designated by Vd.

Furthermore, the dead time period Td that the controller 50 sets to prevent the first switching element 1 and the second switching element 2 of the same phase from turning ON simultaneously is also shown in FIG. 3. Besides, an additional time Tav set by the controller 50 with respect to the control signal SV6 for the first IGBT 6V of the switch 8V is also shown in FIG. 3. The additional time Tav will be described later.

FIG. 4 also illustrates how the power converter 100 according to the first embodiment operates in the situation where the controller 50 has performed the basic operation when the load current > 0 and the charging operation is performed on the resonant capacitor 9. The control signals SW1, SW2 to be respectively applied from the controller 50 to the first switching element 1W and the second switching element 2W of the switching circuit 10W in a situation where the target first switching element is the first switching element 1W of the switching circuit 10W are shown in FIG. 4. In addition, the control signal SW6 to be applied from the controller 50 to the first IGBT 6W of the switch 8W and the load current iW flowing through the W-phase of the AC load RA1 are also shown in FIG. 4. The current iL1 flowing through the resonant inductor L1 is also shown in FIG. 4. The voltage V1w across the first switching element 1W and the voltage V2w across the second switching element 2 are also shown in FIG. 4. In FIG. 4, the voltage value of the DC power supply E1 is designated by Vd.

Furthermore, the dead time period Td that the controller 50 sets to prevent the first switching element 1W and the second switching element 2W from turning ON simultaneously is also shown in FIG. 4. Besides, an additional time Taw set by the controller 50 with respect to the control signal SW6 for the first IGBT 6W of the switch 8W is also shown in FIG. 4. The additional time Taw will be described later.

The additional time Tau is an amount of time that the controller 50 provides to make the high-level period of the control signal SU6 longer than a first period by setting the beginning time t1 of the high-level period of the control signal SU6 at a point in time earlier than the beginning time t2 of the first period as shown in FIG. 2. The length of the additional time Tau is determined by the value of the load current iU. To start producing the LC resonance from the beginning time t2 of the first period, it is preferable that the value of the current iL1 agree with the value of the load current iU at the beginning time t2 of the first period. This is because as long as iL1 < iU is satisfied, all of the current iL1 flows through the AC load RA1, and therefore, the resonant capacitor 9U cannot be charged. The end time of the high-level period of the control signal SU6 may be simultaneous with, or later than, the end time t3 of the dead time period Td. In the example shown in FIG. 2, the end time of the high-level period of the control signal SU6 is set to be simultaneous with the end time t3 of the dead time period Td. The controller 50 sets the high-level period of the control signal SU6 at Tau + (Tres/2), for example. That is to say, the controller 50 sets the length of the first period at Tres/2. In the switching circuit 10U, the voltage V2u across the second switching element 2U becomes Vd at the end time t3 of the dead time period Td, and the voltage V1u across the first switching element 1U goes zero at the end time t3 of the dead time period Td. In the example shown in FIG. 2, the current iL1 starts flowing through the resonant inductor L1 at the beginning time t1 of the high-level period of the control signal SU6, which is later than the time t0 when the dead time period Td begins, and goes zero at a time t4 when the additional time Tau has passed since the end time t3 of the dead time period Td. As for the current iL1, the current iL1 satisfies iL1 ≥ iU from the beginning time t2 of the first period, and therefore, the current iL1 in the hatched part of the current waveform shown as the fifth waveform from the top of FIG. 2 flows into the resonant capacitor 9U to produce LC resonance. From the end time t3 of the dead time period Td and on, the current iL1 will be regenerated to the power converter circuit 11 via the third diode 13 directly connected to the resonant inductor L1.

To start producing the LC resonance at the beginning time t2 of the first period and end a resonant half cycle at the end time of the dead time period Td as described above, the controller 50 determines the additional time Tau based on the load current iU such that iL1 = iU is satisfied at the beginning time t2 of the first period. More specifically, using either the detection result of the load current iU by a current sensor or a signal processing value thereof, or an estimated value of the load current iU, the inductance L of the resonant inductor L1 that has been stored in advance, and the detection result of the voltage V15 across the regenerative capacitor 15 (i.e., the potential V15 at the fourth terminal 154 of the regenerative capacitor 15), for example, the controller 50 determines the additional time Tau by the equation: Tau = iU × (L/V15). In this case, as the detection result of the load current iU or the signal processing value thereof, either a detection value at a carrier cycle at which the additional time Tau is added or a detection value at a timing closest to the carrier cycle may be used. Also, in this case, as the estimated value of the load current iU, a value of the load current iU estimated at the carrier cycle at which the additional time Tau is added may be used, for example. The resonant half cycle in the case of the basic operation is one half of a resonant cycle, which is the reciprocal of the resonant frequency of a resonant circuit including the resonant inductor L1 and one resonant capacitor 9. Thus, if the inductance of the resonant inductor L1 is L and the capacitance of the resonant capacitor 9 is C, then the resonant half cycle is π × (L▪C)^{1/2}. In this embodiment, the controller 50 makes the dead time period Td longer than the resonant half cycle. Alternatively, the controller 50 may also make the dead time period Td as long as the resonant half cycle.

The additional time Tav is an amount of time that the controller 50 provides to make the high-level period of the control signal SV6 longer than the first period by setting the beginning time t11 of the high-level period of the control signal SV6 at a point in time earlier than the beginning time t12 of the first period as shown in FIG. 3. The length of the additional time Tav is determined by the value of the load current iV. To start producing LC resonance from the beginning time t12 of the first period, it is preferable that the value of the current iL1 agree with the value of the load current iV at the beginning time t12 of the first period. This is because as long as iL1 < iV is satisfied, all of the current iL1 flows through the AC load RA1, and therefore, the resonant capacitor 9V cannot be charged with electricity. The end time of the high-level period of the control signal SV6 may be simultaneous with, or later than, the end time t13 of the dead time period Td. In the example shown in FIG. 3, the end time of the high-level period of the control signal SV6 is set to be simultaneous with the end time t13 of the dead time period Td. The controller 50 sets the high-level period of the control signal SV6 at Tav + (Tres/2), for example. The voltage V1v across the first switching element 1V goes zero at the end time t13 of the dead time period Td. In the example shown in FIG. 3, the current iL1 starts flowing through the resonant inductor L1 at the beginning time t11 of the high-level period of the control signal SV6, which is later than the beginning time t10 of the dead time period Td, and goes zero at a time t14 when the additional time Tav has passed since the end time t13 of the dead time period Td. As for the current iL1, the current iL1 satisfies iL1 ≥ iV from the beginning time t12 of the first period and on, and therefore, the current iL1 in the hatched part of the current waveform shown as the fourth waveform from the top of FIG. 3 flows into the resonant capacitor 9V to produce the LC resonance. From the end time t13 of the dead time period Td and on, the current iL1 will be regenerated to the power converter circuit 11 via the third diode 13 directly connected to the resonant inductor L1.

To start producing the LC resonance at the beginning time t12 of the first period and end the resonant half cycle at the end time t13 of the dead time period Td as described above, the controller 50 determines the additional time Tav based on the load current iV such that iL1 = iV is satisfied at the beginning time t12 of the first period. More specifically, using either the detection result of the load current iV by a current sensor or a signal processing value thereof, or an estimated value of the load current iV, the inductance L of the resonant inductor L1 that has been stored in advance, and the detection result of the voltage V15 across the regenerative capacitor 15, for example, the controller 50 determines the additional time Tav by the equation: Tav = iV × (L/V15). In this case, as the detection result of the load current iV or the signal processing value thereof, either a detection value at a carrier cycle at which the additional time Tav is added or a detection value at a timing closest to the carrier cycle may be used. Also, in this case, as the estimated value of the load current iV, a value of the load current iV estimated at the carrier cycle at which the additional time Tav is added may be used, for example.

The additional time Taw is an amount of time that the controller 50 provides to make the high-level period of the control signal SW6 longer than the first period by setting the beginning time t21 of the high-level period of the control signal SW6 at a point in time earlier than the beginning time t22 of the first period as shown in FIG. 4. The length of the additional time Taw is determined by the value of the load current iW. To start producing LC resonance from the beginning time t22 of the first period, it is preferable that the value of the current iL1 agree with the value of the load current iW at the beginning time t22 of the first period. This is because as long as iL1 < iW is satisfied, all of the current iL1 flows through the AC load RA1, and therefore, the resonant capacitor 9W cannot be charged with electricity. The end time of the high-level period of the control signal SW6 may be simultaneous with, or later than, the end time t23 of the dead time period Td. In the example shown in FIG. 4, the end time of the high-level period of the control signal SW6 is set to be simultaneous with the end time t23 of the dead time period Td. The controller 50 sets the high-level period of the control signal SW6 at Taw + (Tres/2), for example. The voltage V1w across the first switching element 1W goes zero at the end time t23 of the dead time period Td. In the example shown in FIG. 4, the current iL1 starts flowing through the resonant inductor L1 at the beginning time t21 of the high-level period of the control signal SW6, which is later than the beginning time t20 of the dead time period Td, and goes zero at a time t24 when the additional time Taw has passed since the end time t23 of the dead time period Td. As for the current iL1, the current iL1 satisfies iL1 ≥ iW from the beginning time t22 of the first period and on, and therefore, the current iL1 in the hatched part of the current waveform shown as the fourth waveform from the top of FIG. 4 flows into the resonant capacitor 9W to produce the LC resonance. From the end time t23 of the dead time period Td and on, the current iL1 will be regenerated to the power converter circuit 11 via the third diode 13 directly connected to the resonant inductor L1.

The controller 50 determines the additional time Taw based on the load current iW. More specifically, using the detection result of the load current iW by a current sensor, the inductance L of the resonant inductor L1 that has been stored in advance, and the detection result of the voltage V15 across the regenerative capacitor 15, for example, the controller 50 determines the additional time Taw by the equation: Taw = iW × (L/V15). In this case, as the detection result of the load current iW or the signal processing value thereof, either a detection value at a carrier cycle at which the additional time Taw is added or a detection value at a timing closest to the carrier cycle may be used. Also, in this case, as the estimated value of the load current iW, a value of the load current iW estimated at the carrier cycle at which the additional time Taw is added may be used, for example.

### (3.1.2) Operation of soft-switching second switching element when load current > 0

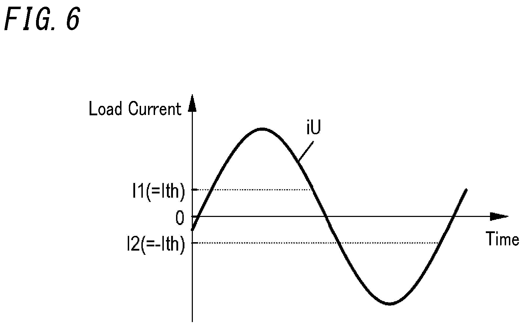

FIG. 6 shows a first current threshold value I1 and a second current threshold value I2 for use in the controller 50 of the power converter 100 according to the first embodiment. If the target of the soft switching is a second switching element 2 (hereinafter referred to as a "target second switching element 2") and the polarity of the load current (which is the load current iU, the load current iV, or the load current iW) flowing through the AC terminal 41 connected to the target second switching element 2 is positive, then the controller 50 compares the current value of the load current with a first current threshold value I1 (= Ith, refer to FIG. 6). Specifically, according to an exemplary operation design of the controller 50, if the current value of the load current is greater than the first current threshold value I1, the controller 50 does not turn the switch 8 ON. On the other hand, if the current value of the load current is less than the first current threshold value I1, the controller 50 turns the switch 8 ON in the dead time period Td. In this case, the dead time period Td is set to be longer than the resonant half cycle as in the (3.1.1) section. In the power converter 100, if the current value of the load current is greater than the first current threshold value I1, the controller 50 may perform, using the load current iU, a discharging operation on the resonant capacitor 9U connected to the target second switching element 2 in parallel without turning ON the switch 8 corresponding to the target second switching element 2. This allows the power converter 100 to make zero-voltage soft switching of the target second switching element 2.

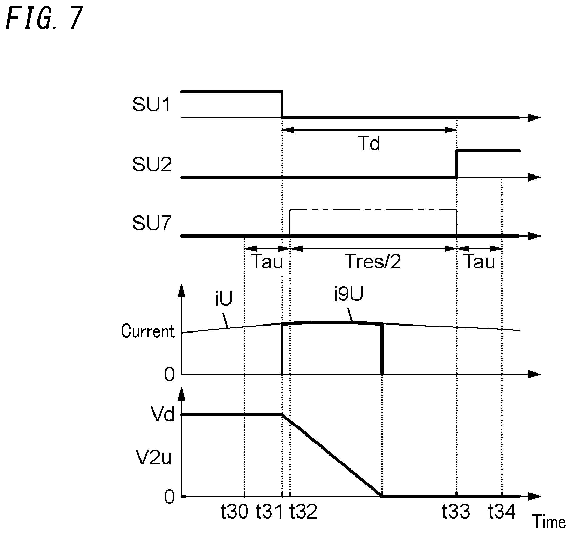

FIG. 7 illustrates how the power converter 100 according to the first embodiment operates in a situation where its controller 50 has performed the basic operation when a load current > 0 and a discharging operation is performed on its resonant capacitor. In FIG. 7, the control signals SU1, SU2, SU7, the load current iU, a current i9U flowing from the resonant capacitor 9U, and the voltage V2u across the second switching element 2U are shown as for a situation where the target second switching element 2 is the second switching element 2U of the switching circuit 10U and the current value of the load current is greater than the first current threshold value I1. In addition, the dead time period Td and the additional time Tau set by the controller 50 with respect to a control signal SU7 for the second IGBT 7U of the switch 8U are also shown in FIG. 7.

If the current value of the load current iU is greater than the first current threshold value I1, the controller 50 does not provide any high-level period for the control signal SU7. In that case, in the power converter 100, a current i9U starts flowing from the resonant capacitor 9U at a time t31 when the control signal SU1 changes from high level to low level, the current i9U decreases to zero before the end time t33 of the dead time period Td, and the voltage V2u across the second switching element 2U goes zero before the end time t33 of the dead time period Td. Thus, in the power converter 100, when the control signal SU2 changes from low level to high level at the end time t33 of the dead time period Td, the second switching element 2U is subjected to zero-voltage soft switching.

If the current value of the load current iU is less than the first current threshold value I1, then the controller 50 provides a high-level period for the control signal SU7 as indicated by the two-dot chain in FIG. 7, for example. In that case, the beginning time t32 of the high-level period of the control unit SU7 may be, for example, later than the beginning time t31 of the dead time period Td. Also, the end time of the high-level period of the control signal SU7 is simultaneous with the end time t33 of the dead time period Td. Thus, in the power converter 100, the voltage V2u across the second switching element 2U goes zero before the end time t33 of the dead time period Td. Consequently, in the power converter 100, when the control signal SU2 changes from low level to high level at the end time t33 of the dead time period Td, the second switching element 2U is subjected to zero-voltage soft switching. Alternatively, the beginning time of the high-level period of the control signal SU7 may be a time t30 which is earlier than the beginning time of the first period by the additional time Tau. The end time of the high-level period of the control signal SU7 may be a time t34 which is later than the end time t33 of the dead time period Td by the additional time Tau. Note that the time before or after the first period of the high-level period does not have to be the additional time Tau but may also be any other preset time. Also, note that how the way to determine the high-level period of a control signal for the switch 8 changes according to the threshold value of the load current is only an example of ideal design, and therefore, should not be construed as limiting. For example, even if the current value of the load current is greater than the first current threshold value I1, the controller 50 may also set the high-level period of the control signal for the switch 8 to turn the switch 8 ON during the dead time period Td, for example. Also, even if the current value of the load current is less than the first current threshold value I1, the controller 50 does not have to turn the switch 8 ON during the first period. Alternatively, the controller 50 may set the high-level period of the control signal for the switch 8 to, for example, always keep the switch 8 ON throughout the first period irrespective of the first current threshold value I1. Still alternatively, the controller 50 may always keep the switch 8 OFF irrespective of the first current threshold value I1. Yet alternatively, the controller 50 may perform some of the operations described in the (3.1.2) section in combination as appropriate. Furthermore, the controller 50 does not have to cause the high-level period of a control signal for the switch 8 to agree with the first period as in the example described above. For example, the high-level period of the control signal for the switch 8 may be designed according to the designed time of the resonant half cycle to have a length different from the length of the first period.

### (3.1.3) Operation of soft-switching second switching element when load current < 0

If the polarity of the load current (which is the load current iU, the load current iV, or the load current iW) flowing through the AC terminal 41 connected to the target second switching element 2 is negative, then the controller 50 turns ON the second IGBT 7 corresponding to the target second switching element 2. In this manner, the controller 50 causes the resonant capacitor 9 and the resonant inductor L1 connected to the target second switching element 2 to produce resonance, thereby discharging electricity from the resonant capacitor 9 and reducing the voltage across the target second switching element 2 to zero. This allows the power converter 100 to make zero-voltage soft switching of the target second switching element 2.

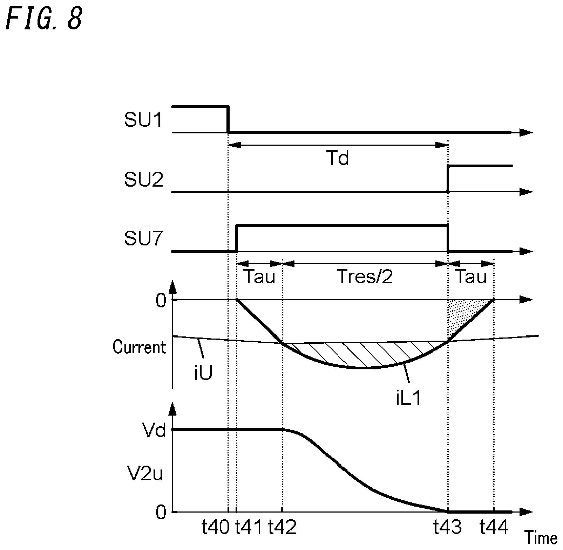

FIG. 8 also illustrates how the power converter 100 according to the first embodiment operates in a situation where its controller 50 has performed the basic operation when the load current < 0 and a discharging operation is performed on the resonant capacitor 9. In FIG. 8, the control signals SU1, SU2, SU7, the load current iU, a current iL1 flowing through the resonant inductor L1, and the voltage V2u across the second switching element 2U are shown as for a situation where the target second switching element 2 is the second switching element 2U of the switching circuit 10U.

Furthermore, the dead time period Td that the controller 50 sets to prevent the first switching element 1 and the second switching element 2 of the same phase from turning ON simultaneously is also shown in FIG. 8. Besides, an additional time Tau set by the controller 50 with respect to the control signal SU7 for the second IGBT 7U of the switch 8U is also shown in FIG. 8. The end time of the high-level period of the control signal SU7 may be simultaneous with, or later than, the end time t43 of the dead time period Td. In the example shown in FIG. 8, the end time of the high-level period of the control signal SU7 is set to be simultaneous with the end time t43 of the dead time period Td. The controller 50 may set the high-level period of the control signal SU7 at Tau + (Tres/2), for example. In the switching circuit 10U, the voltage V2u across the second switching element 2U goes zero at the end time t43 of the dead time period Td. In the example shown in FIG. 8, the current iL1 starts flowing through the resonant inductor L1 at the beginning time t41 of the high-level period of the control signal SU7, which is later than the beginning time t40 of the dead time period Td, and goes zero at a time t44 when the additional time Tau has passed since the end time t43 of the dead time period Td. As for the current iL1, the current iL1 satisfies iL1 ≤ iU from the beginning time t42 of the first period, and therefore, LC resonance is produced to cause a resonant current (i.e., a discharging current from the resonant capacitor 9U) to flow from the resonant capacitor 9U toward the resonant inductor L1. From the end time t43 of the dead time period Td and on, the current iL1 will be regenerated to the power converter circuit 11 via the fourth diode 14 directly connected to the resonant inductor L1.

To start producing the LC resonance at the beginning time t32 of the first period and end a resonant half cycle at the end time t43 of the dead time period Td, the controller 50 determines the additional time Tau based on the load current iU such that iL1 = iU is satisfied at the beginning time t42 of the first period. More specifically, using either the detection result of the output current iU by a current sensor or a signal processing value thereof, or an estimated value of the load current iU, the inductance L of the resonant inductor L1 that has been stored in advance, and the detection result of the voltage V15 across the regenerative capacitor 15, for example, the controller 50 determines the additional time Tau by the equation: Tau = | iU | × (L/V15). In this case, as the load current value (i.e., the detection result of the load current iU or the signal processing value thereof), either a detection value at a carrier cycle at which the additional time Tau is added or a detection value at a timing closest to the carrier cycle may be used. Also, in this case, as the estimated value of the load current iU, a value of the load current iU estimated at the carrier cycle at which the additional time Tau is added may be used, for example. The resonant half cycle in the case of the basic operation is one half of a resonant cycle, which is the reciprocal of the resonant frequency of a resonant circuit including the resonant inductor L1 and one resonant capacitor 9. Thus, if the inductance of the resonant inductor L1 is L and the capacitance of the resonant capacitor 9 is C, then the resonant half cycle is π × (L▪C)^{1/2}. The controller 50 makes the dead time period Td in the case of the basic operation longer than the resonant half cycle in the case of the basic operation, for example. Alternatively, the dead time period Td in the case of the basic operation may also be set to be as long as the resonant half cycle in the case of the basic operation.

### (3.1.4) Operation of soft-switching first switching element when load current < 0

If the polarity of the load current (which is the load current iU, the load current iV, or the load current iW) flowing through the AC terminal 41 connected to the target first switching element 1 is negative, then the controller 50 compares the current value of the load current with a second current threshold value I2 (= -Ith, refer to FIG. 6). If the current value of the load current is less than the second current threshold value I2, the controller 50 does not turn the switch 8 ON according to an exemplary operation design of the controller 50. On the other hand, if the current value of the load current is greater than the second current threshold value I2, the controller 50 turns the switch 8 ON in the first period. In this case, the dead time period Td is set to be, for example, longer than the resonant half cycle as in the (3.1.1) section. In the power converter 100, if the current value of the load current is less than the second current threshold value I2, the controller 50 may charge, using the load current, the resonant capacitor 9U connected to the target first switching element 1 in series without turning ON the switch 8 corresponding to the target first switching element 1. This allows the power converter 100 to make zero-voltage soft switching of the target first switching element 1.

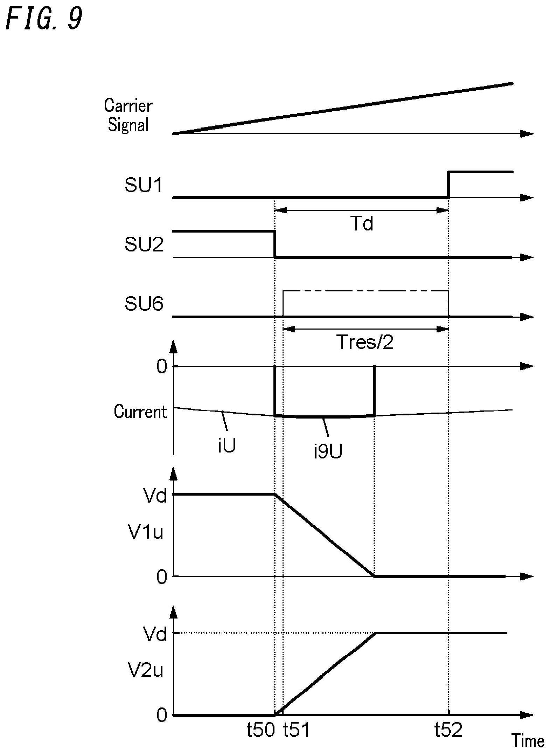

FIG. 9 illustrates how the power converter 100 according to the first embodiment operates in a situation where its controller 50 has performed the basic operation when the load current < 0 and the charging operation is performed on its resonant capacitor 9. In FIG. 9, the control signals SU1, SU2, SU6, the load current iU, a current i9U flowing from the resonant capacitor 9U, and the voltage V2u across the second switching element 2U are shown as for a situation where the target first switching element 1 is the first switching element 1U of the switching circuit 10U and the current value of the load current is greater than the second current threshold value I2 (in other words, a situation where the absolute value of the current value of the load current is less than the absolute value of the second current threshold value I2). In addition, the dead time period Td is also shown in FIG. 9.

If the current value of the load current is less than the second current threshold value I2 (in other words, if the absolute value of the load current is greater than the absolute value of the second current threshold value I2), the controller 50 does not provide any high-level period for the control signal SU6. In that case, in the power converter 100, a current i9U starts flowing through the resonant capacitor 9U at a time t50 when the control signal SU2 changes from high level to low level. As a result, in the power converter 100, the resonant capacitor 9U is charged with electricity to cause an increase in the voltage V2u across the second switching element 2U. The current i9U goes zero before the end time t52 of the dead time period Td, and the voltage V1u across the first switching element 1U goes zero before the end time t52 of the dead time period Td. Thus, in the power converter 100, when the control signal SU1 changes from low level to high level at the end time t52 of the dead time period Td, the first switching element 1 is subjected to zero-voltage soft switching.

If the current value of the load current is greater than the second current threshold value I2 (in other words, if the absolute value of the load current is less than the absolute value of the second current threshold value), then the controller 50 provides a high-level period for the control signal SU6 as indicated by the two-dot chain in FIG. 9, for example. In that case, the beginning time of the high-level period of the control signal SU6 is a time t51 which is later than the beginning time t50 of the dead time period Td. Also, the end time of the high-level period of the control signal SU6 is simultaneous with the end time t52 of the dead time period Td. Thus, in the power converter 100, the voltage V1u across the first switching element 1U goes zero before the end time t52 of the dead time period Td. Consequently, in the power converter 100, when the control signal SU1 changes from low level to high level at the end time t52 of the dead time period Td, the first switching element 1U is subjected to zero-voltage soft switching. Also, note that how the way to determine the high-level period of a control signal for the switch 8 changes according to the threshold value of the load current as described above is only an example of ideal design, and therefore, should not be construed as limiting. For example, even if the current value of the load current is less than the second current threshold value I2, the controller 50 may also set the high-level period of the control signal for the switch 8 to turn the switch 8 ON during the first period. Also, even if the current value of the load current is greater than the second current threshold value I2, the controller 50 does not have to turn the switch 8 ON during the first period. Alternatively, the controller 50 may set the high-level period of the control signal for the switch 8 to, for example, always keep the switch 8 ON throughout the first period irrespective of the second current threshold value I2. Still alternatively, the controller 50 may always keep the switch 8 OFF irrespective of the second current threshold value I2. Yet alternatively, the controller 50 may perform some of the operations described in the (3.1.4) section in combination as appropriate. Furthermore, the controller 50 does not have to cause the high-level period of a control signal for the switch 8 to agree with the first period as in the example described above. For example, the controller 50 may set the high-level period of the control signal for the switch 8 according to the designed time of the resonant half cycle to cause the high-level period of the control signal for the switch 8 to have a length different from the length of the first period.

### (3.2) First control operation and second control operation

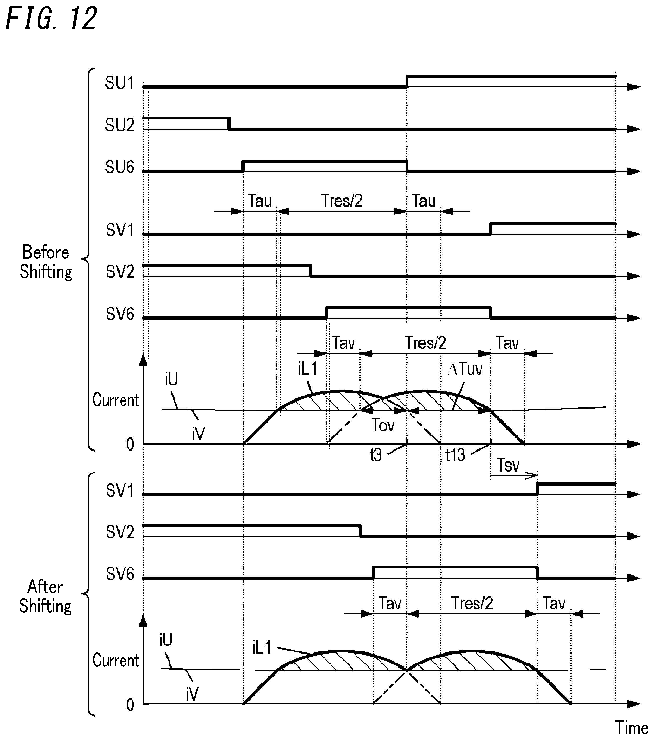

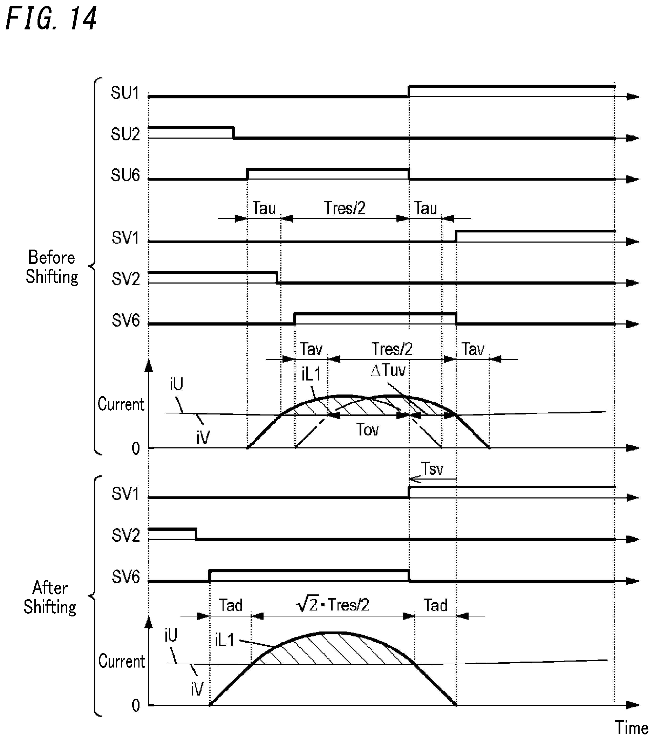

The controller 50 performs either a first control operation or a second control operation when determining that resonant currents respectively passing through two or more switches 8 belonging to the plurality of switches 8 should be going to flow through the resonant inductor L1 simultaneously. The controller 50 is configured to perform either the first control operation or the second control operation based on an overlap period Tov (refer to FIGS. 12 and 14) in which the resonant currents passing respectively through the two or more switches 8 flow simultaneously. As used herein, the expression "when determining that resonant currents, respectively passing through two or more switches 8 belonging to the plurality of switches 8, should be going to flow simultaneously" refers to a situation where it has been presumed in advance that the resonant currents respectively passing through two or more switches 8 would flow simultaneously through the resonant inductor L1.

The first control operation is the operation of shifting the high-level period of a control signal for at least one switch 8 out of the two or more switches 8 to prevent the resonant currents passing respectively through the two or more switches 8 from flowing simultaneously through the resonant inductor L1.

The second control operation is the operation of shifting the high-level period of a control signal for at least one switch 8 out of the two or more switches 8 to cause the respective high-level periods of control signals to be applied to the two or more switches 8, respectively, to overlap with each other for at least a predetermined period during a dead time period corresponding to each of two or more switching circuits 10 connected respectively to the two or more switches 8 which belong to the plurality of switching circuits 10. The predetermined period is the entirety of a resonant half cycle of a resonant circuit including the resonant inductor L1 and the two or more resonant capacitors 9 connected respectively to the two or more switches 8. The controller 50 is ready to perform a third control operation of making the high-level period of the control signal for each of the two or more switches 8 longer than the predetermined period by an additional time. The controller 50 performs the third control operation when performing the second control operation.

### (3.2.1) Determining whether two-phase resonant currents flow simultaneously

FIG. 5 shows how duties and load currents, respectively corresponding to three-phase voltage instructions in an AC load connected to a plurality of AC terminals of the power converter 100 according to the first embodiment, change with time. In the power converter 100, the phases of three-phase (i.e., U-, V-, and W-phase) voltage instructions are different from each other by 120 degrees, but the instruction values of two-phase voltage instructions approach each other every electrical angle of 60 degrees and the duties of two-phase control signals approach each other (refer to regions A1, A2 shown in FIG. 5). Specifically, in the region A1 shown in FIG. 5, the duty of the U-phase control signal and the duty of the V-phase control signal become around 0.75. In the region A2 shown in FIG. 5, the duty of the U-phase control signal and the duty of the V-phase control signal become around 0.25. In the power converter 100, the polarity of the resonant current is the same as the polarity of the current iL1. In the region A1, the polarity of the resonant current is positive. In the region A2, the polarity of the resonant current is negative. In the power converter 100, in the region A1, the time lag between the beginning time t1 (refer to FIG. 2) of the high-level period of the control signal SU6 to be applied to the first IGBT 6U and the beginning time t11 (refer to FIG. 3) of the high-level period of the control signal SV6 to be applied to the first IGBT 6V becomes so short in one cycle time of the carrier signal, for example, that the U-phase resonant current and the V-phase resonant current may flow simultaneously through the resonant inductor L1. In the power converter 100, the direction of the resonant current in the region A2 is reverse from that of the resonant current in the region A1 but the U-phase resonant current and the V-phase resonant current may flow simultaneously through the resonant inductor L1.

Supposing the capacitance of each of the plurality of resonant capacitors 9U, 9V, and 9W is C, if a U-phase current and a V-phase current flow simultaneously through the resonant inductor L1, a capacitor having a combined capacitance (= 2 × C) of the resonant capacitor 9U and the resonant capacitor 9V is connected to the resonant inductor L1 in series in an equivalent circuit. Thus, in the power converter 100, if two-phase currents flow simultaneously through the resonant inductor L1, then the resonant frequency of a resonant circuit including the resonant inductor L1 changes compared to a situation where a single-phase current flows through the resonant inductor L1. Consequently, the power converter 100 may be unable to make zero-voltage soft switching.

### (3.2.1.1) When charging operation is performed on resonant capacitor

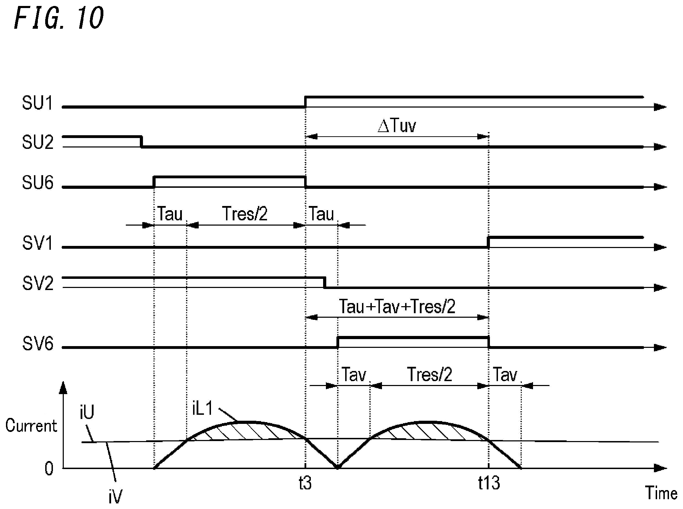

FIG. 10 is a timing chart showing an exemplary boundary condition between a situation where currents flowing through the resonant inductor L1 do not overlap with each other (i.e., do not flow simultaneously) and a situation where the currents flowing through the resonant inductor L1 overlap with each other (i.e., flow simultaneously) in the power converter 100 according to the first embodiment. Specifically, FIG. 10 shows an exemplary boundary condition between a situation where a U-phase current (i.e., a current passing through the switch 8U) and a V-phase current (i.e., a current passing through the switch 8V) do not overlap with each other (i.e., do not flow simultaneously) and a situation where the U-phase current and the V-phase current overlap with each other (i.e., flow simultaneously). The boundary condition will be described with reference to FIG. 10. FIG. 11 is a timing chart showing an exemplary boundary condition between a situation where a U-phase resonant current and a V-phase resonant current do not overlap with each other (i.e., do not flow simultaneously) and a situation where the U-phase resonant current and the V-phase resonant current overlap with each other (i.e., flow simultaneously) in the power converter 100 according to the first embodiment. Specifically, FIG. 11 shows an exemplary boundary condition between a situation where a U-phase resonant current and a V-phase resonant current do not overlap with each other (i.e., do not flow simultaneously) in the resonant inductor L1 and a situation where the U-phase resonant current and the V-phase resonant current overlap with each other (i.e., flow simultaneously) in the resonant inductor L1. The boundary condition will be described with reference to FIG. 11.

In the power converter 100, if the time lag ΔTuv is equal to or greater than Tau + Tav + (Tres/2), then the U-phase current and the V-phase current do not overlap with each other in the resonant inductor L1 as shown in FIG. 10. On the other hand, if the time lag ΔTuv is less than Tau + Tav + (Tres/2), then the U-phase current and the V-phase current overlap with each other. The time lag ΔTuv is a time lag between the beginning time t3 of the high-level period of the control signal SU1 and the beginning time t13 of the high-level period of the control signal SV1.

In the power converter 100, if the time lag ΔTuv is equal to or greater than Tres/2, then the U-phase resonant current and the V-phase resonant current do not overlap with each other in the resonant inductor L1 as shown in FIG. 11. On the other hand, if the time lag ΔTuv is less than Tres/2, then the U-phase current and the V-phase current overlap with each other in the resonant inductor L1 as shown in FIG. 11.

The controller 50 sets a threshold value for the time lag ΔTuv at Tres/2. If the time lag ΔTuv is less than Tres/2, the controller 50 presumes that resonant currents corresponding to the two phases of the switching circuit 10U and the switching circuit 10V belonging to the plurality of switching circuits 10 would flow simultaneously through the resonant inductor L1. Note that this threshold value is only an example, and the threshold value may also be set at any other value. For example, with the error of the Tres/2 value taken into account, the threshold value may also be set at a value even larger than Tres/2. In addition, the above-described method for calculating the time lag ΔTuv to determine whether the two-phase resonant currents flow simultaneously is only an example. Rather, any other calculating method may also be adopted as long as a time lag corresponding to the time lag ΔTuv may be calculated. For example, as the time lag ΔTuv for use to determine whether the two-phase resonant currents flow simultaneously, a time lag between the end time t0 (refer to FIG. 2) of the high-level period of the control signal SU2 and the end time t10 (refer to FIG. 3) of the high-level period of the control signal SV2 may also be used.

Also, in the following description, the time lag between the beginning time t3 (refer to FIG. 2) of the high-level period of the control signal SU1 and the beginning time t23 (refer to FIG. 4) of the high-level period of the control signal SW1 will be hereinafter referred to as "ΔTuw." In the power converter 100, if the time lag ΔTuw is equal to or greater than Tres/2, then the U-phase resonant current and the W-phase resonant current do not overlap with each other in the resonant inductor L1. On the other hand, if the time lag ΔTuv is less than Tres/2, then the U-phase resonant current and the W-phase resonant current overlap with each other in the resonant inductor L1.

The controller 50 sets a threshold value for the time lag ΔTuw at Tres/2. If the time lag ΔTuw is less than the threshold value, the controller 50 presumes that resonant currents corresponding to the two phases of the switching circuit 10U and the switching circuit 10W belonging to the plurality of switching circuits 10 would flow simultaneously through the resonant inductor L1. Note that this threshold value is only an example, and the threshold value may also be set at any other value. For example, with the error of the Tres/2 value taken into account, the threshold value may also be set at a value even larger than Tres/2. In addition, the above-described method for calculating the time lag ΔTuw to determine whether the two-phase resonant currents flow simultaneously is only an example. Rather, any other calculating method may also be adopted as long as a time lag corresponding to the time lag ΔTuw may be calculated. For example, as the time lag ΔTuw for use to determine whether the two-phase resonant currents flow simultaneously, a time lag between the end time t0 (refer to FIG. 2) of the high-level period of the control signal SU2 and the end time t20 (refer to FIG. 4) of the high-level period of the control signal SW2 may also be used.

Also, in the following description, the time lag between the beginning time t13 (refer to FIG. 3) of the high-level period of the control signal SV1 to be applied to the first switching element V1 of the switching circuit 10V and the beginning time t23 (refer to FIG. 4) of the high-level period of the control signal SW1 to be applied to the first switching element 1W of the switching circuit 10W will be hereinafter referred to as "ΔTvw." In the power converter 100, if the time lag ΔTvw is equal to or greater than Tres/2, then the V-phase resonant current and the W-phase resonant current do not overlap with each other in the resonant inductor L1. On the other hand, if the time lag ΔTvw is less than Tres/2, then the V-phase resonant current and the W-phase resonant current overlap with each other in the resonant inductor L1.

The controller 50 sets a threshold value for the time lag ΔTuw at Tres/2. If the time lag ΔTuw is less than the threshold value, the controller 50 presumes that resonant currents corresponding to the two phases of the switching circuit 10V and the switching circuit 10W belonging to the plurality of switching circuits 10 would flow simultaneously through the resonant inductor L1. Note that this threshold value is only an example, and the threshold value may also be set at any other value. For example, with the error of the Tres/2 value taken into account, the threshold value may also be set at a value even larger than Tres/2. In addition, the above-described method for calculating the time lag ΔTvw to determine whether the two-phase resonant currents flow simultaneously is only an example. Rather, any other calculating method may also be adopted as long as a time lag corresponding to the time lag ΔTuw may be calculated. For example, as the time lag ΔTvw for use to determine whether the two-phase resonant currents flow simultaneously, a time lag between the end time t10 (refer to FIG. 3) of the high-level period of the control signal SV2 and the end time t20 (refer to FIG. 4) of the high-level period of the control signal SW2 may also be used.

### (3.2.1.2) When discharging operation is performed on resonant capacitor

When performing a discharging operation on the resonant capacitor 9, the controller 50 may also determine, using the same time lag and threshold value as in the case of performing the charging operation on the resonant capacitor 9, whether two-phase resonant currents flow simultaneously.

For example, if the time lag between the beginning time of the high-level period of the control signal SU2 and the beginning time of the high-level period of the control signal SV2 is less than the threshold value (e.g., Tres/2), then the controller 50 presumes that the U-phase resonant current and the V-phase resonant current would overlap with each other.

Also, if the time lag between the beginning time of the high-level period of the control signal SU2 and the beginning time of the high-level period of the control signal SW2 is less than the threshold value (e.g., Tres/2), then the controller 50 presumes that the U-phase resonant current and the W-phase resonant current would overlap with each other.

Furthermore, if the time lag between the beginning time of the high-level period of the control signal SV2 and the beginning time of the high-level period of the control signal SW2 is less than the threshold value (e.g., Tres/2), then the controller 50 presumes that the V-phase resonant current and the W-phase resonant current would overlap with each other.

### (3.2.2) First control operation and second control operation to be performed when two-phase resonant currents are determined to flow simultaneously

The controller 50 performs, when determining that resonant currents respectively passing through two switches 8 should be going to flow simultaneously through the resonant inductor L1, for example, either the first control operation or the second control operation based on the overlap period Tov in which the resonant currents respectively passing through the two switches 8 flow simultaneously.

The controller 50 performs the first control operation of shifting the high-level period of the control signal for at least one switch 8 out of the two switches 8 to prevent the resonant currents passing respectively through the two switches 8 from flowing simultaneously through the resonant inductor L1. When performing the first control operation, the controller 50 performs the first control operation not to change the length of the dead time period Td between the high-level period of a control signal to be applied to the first switching element 1 and the high-level period of a control signal to be applied to the second switching element 2 in two switching circuits 10 corresponding to the two switches 8, respectively.

The controller 50 performs the second control operation of shifting the high-level period of a control signal for one switch 8 out of the two switches 8 to cause the respective high-level periods of control signals to be applied to the two switches 8, respectively, to overlap with each other for at least a predetermined period during a dead time period Td corresponding to each of two switching circuits 10 connected respectively to the two switches 8 which belong to the plurality of (three) switching circuits 10. When performing the second control operation, the controller 50 performs the second control operation not to change the length of the dead time period Td between the high-level period of a control signal to be applied to the first switching element 1 and the high-level period of a control signal to be applied to the second switching element 2 in two switching circuits 10 corresponding to the two switches 8, respectively.

In the following description, when the high-level period of the control signal SU6 or SU7 to be applied to the switch 8U is shifted, the amount of time by which the high-level period of the control signal SU6 or SU7 is shifted will be hereinafter designated by Tsu for the sake of convenience of description. On the other hand, when the high-level period of the control signal SV6 or SV7 to be applied to the switch 8V is shifted, the amount of time by which the high-level period of the control signal SV6 or SV7 is shifted will be hereinafter designated by Tsv. Furthermore, when the high-level period of the control signal SW6 or SW7 to be applied to the switch 8W is shifted, the amount of time by which the high-level period of the control signal SW6 or SW7 is shifted will be hereinafter designated by Tws. In the following description, a situation where it is presumed that the resonant current flowing through the U-phase switch 8U and the resonant current flowing through the V-phase switch 8V would overlap with each other in the resonant inductor L1 will be described as an example. The same statement applies to the combination of the U- and W-phases and the combination of the V- and W-phases as well.

### (3.2.2.1) Operation of soft-switching first switching element

FIG. 12 is a timing chart illustrating how the power converter 100 according to the first embodiment operates in a situation where its controller 50 performs the first control operation. The upper part of FIG. 12 is a timing chart showing a situation where the controller 50 has determined in advance that two-phase resonant currents, namely, U- and V-phase resonant currents, should be going to flow simultaneously in the period corresponding to the region A1 shown in FIG. 5. In this case, in the upper part of FIG. 12, shown are the respective waveforms of the control signals SU1, SU2, SV1, SV2, the control signals SU6, SV6, the load currents iU, iV, and the current iL1 before shifting. In the upper part of FIG. 12, the overlap period Tov in which the resonant current passing through the switch 8U (i.e., the U-phase resonant current) and the resonant current passing through the switch 8V (i.e., the V-phase resonant current) flow simultaneously is shorter than the time lag ΔTuv.

On the other hand, the lower part of FIG. 12 is a timing chart showing a situation where the controller 50 has performed the first control operation (which will be hereinafter referred to as "after shifting"). In this case, the lower part of FIG. 12 is a timing chart showing the respective waveforms of the control signals SV1, SV2, the control signal SV6, and the load currents iU, iV, and the current iL1 after shifting. In the example shown in FIG. 12, the polarity of the load currents iU, iV flowing through the two AC terminals 41U, 41V respectively connected to the two switches 8U, 8V is positive and the absolute value of the load current iU is the same as the absolute value of the load current iV. Note that FIG. 12 shows a timing chart for one cycle of the carrier signal.

In the example shown in FIG. 12, the controller 50 shifts, when performing the first control operation, the high-level period of the control signal SV6 by the shifted time Tsv in such a direction as to postpone the high-level period of the control signal SV6. The shifted time Tsv is as long as the overlap period Tov in which the resonant current (U-phase resonant current) passing through the switch 8U and the resonant current (V-phase resonant current) passing through the switch 8V flow simultaneously. Tov = Tres/2 - ΔTuv. Thus, as shown in the lower part of FIG. 12, the resonant current passing through the switch 8U and the resonant current passing through the switch 8V do not overlap with each other, thus allowing the first switching element 1U to be subjected to zero-voltage soft switching.

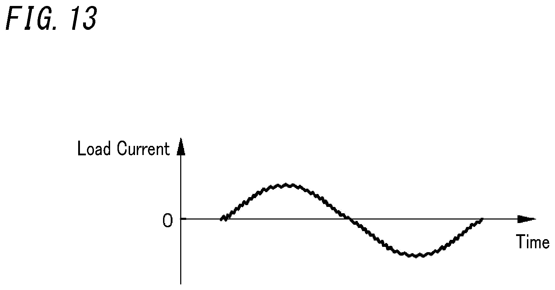

FIG. 13 is a waveform diagram of a load current in the power converter 100 according to the first embodiment. In the power converter 100, making the controller 50 perform the first control operation when the inequality Tov < ΔTuv is satisfied allows the shifted time Tsv to be shortened compared to a situation where the controller 50 shifts the high-level period of the control signal SV6 in such a direction as to advance the high-level period of the control signal SV6 when the inequality Tov < ΔTuv is satisfied, thus causing a decrease in the current distortion (refer to FIG. 13) of the output current iV within one cycle of the carrier signal. Note that one cycle of the carrier signal is shorter than both one cycle of the output current iV and a half cycle of the output current iV.

FIG. 14 is a timing chart illustrating how the power converter 100 according to the first embodiment operates in a situation where its controller 50 performs the second control operation. The upper part of FIG. 14 is a timing chart showing a situation where the controller 50 has determined in advance that two-phase resonant currents, namely, U- and V-phase resonant currents, should be going to flow simultaneously in the period corresponding to the region A1 shown in FIG. 5. In this case, in the upper part of FIG. 14, shown are the respective waveforms of the control signals SU1, SU2, SV1, SV2, the control signals SU6, SV6, the load currents iU, iV, and the current iL1 before shifting. In the upper part of FIG. 14, the overlap period Tov in which the resonant current passing through the switch 8U (i.e., the U-phase resonant current) and the resonant current passing through the switch 8V (i.e., the V-phase resonant current) flow simultaneously is longer than the time lag ΔTuv.

On the other hand, the lower part of FIG. 14 is a timing chart showing a situation where the controller 50 has performed the second control operation (which will be hereinafter referred to as "after shifting"). In this case, the lower part of FIG. 14 is a timing chart showing the respective waveforms of the control signals SV1, SV2, the control signal SV6, and the load currents iU, iV, the current iL1 after shifting. In the example shown in FIG. 14, the polarity of the load currents iU, iV flowing through the two AC terminals 41U, 41V respectively connected to the two switches 8U, 8V is positive and the absolute value of the load current iU is the same as the absolute value of the load current iV. Note that FIG. 14 shows a timing chart for one cycle of the carrier signal.

If the overlap period Tov is longer than the time lag ΔTuv, then the controller 50 performs a first step, a second step, and a third step in this order.

The first step includes synchronizing U-phase control signals SU1, SU2 with V-phase control signals SV1, SV2. In the example shown in the lower part of FIG. 14, the U-phase control signals SU1, SU2 are synchronized with the V-phase control signals SV1, SV2 by shifting (advancing), by the shifted time Tsv, the beginning time of the high-level period of the V-phase control signal SV1 and the end time of the high-level period of the V-phase control signal SV2 compared with the example shown in the upper part of FIG. 14. In the example shown in FIG. 14, the shifted time Tsv is the time lag ΔTuv between the beginning time of the high-level period of the control signal SU1 and the beginning time of the high-level period of the control signal SV1 before shifting. Alternatively, the time lag ΔTuv may also be the time lag between the end time of the high-level period of the control signal SU2 and the end time of the high-level period of the control signal SV2. As an alternative, the first step may include synchronizing the U-phase control signals SU1, SU2 with the V-phase control signals SV1, SV2 by shifting (postponing), by the shifted time Tsu, the respective high-level periods of the U-phase control signals SU1, SU2.

The second step includes adding an additional time Tad corresponding to the total current value | iU + iV | of the two-phase load currents iU, iV to the respective high-level periods of control signals SU6, SV6 for two-phase switches 8 corresponding to the two-phase resonant half cycles Tres/2, respectively. More specifically, using either the respective detection results of the load currents iU, iV by current sensors or signal processing values thereof, or estimated values of the load currents iU, iV, the inductance L of the resonant inductor L1 that has been stored in advance, and the detection result of the potential V15 at the regenerative capacitor 15, for example, the controller 50 determines the additional time Tad by the equation: Tad = L × | iU + iV | / V15. The second step corresponds to the third control operation described above.

The third step includes changing the lengths of the respective high-level periods and dead time period of the control signals SU6, SV6 according to the resonant half cycle (= 2^{1/2} × Tres/2) of the resonant circuit. More specifically, the controller 50 subtracts the additional time Tad from the high-level period of each of the control signals SU6, SV6 and sets the length of the remainder period as the resonant half cycle 2^{1/2} × Tres/2 of the resonant circuit and changes the dead time period into a dead time period which is longer than the resonant half cycle of the resonant circuit. Note that the end time of the high-level period of the control signal SU6, SV6 may be simultaneous with, or later than, the end time of the resonant half cycle.

In this power converter 100, if the controller 50 does not perform the second control operation, then the voltage V2u, V2v across the second switching element 2U, 2V has not risen to Vd by a point in time when the control signal SU1, SV1 makes a transition from the low-level period to the high-level period (i.e., the end time of the dead time period corresponding to each of the U- and V-phases). That is to say, if the controller 50 does not perform the second control operation, then the resonant capacitor 9U, 9V has not been charged fully yet by the end time of the dead time period Td corresponding to each of the U- and V-phases. Thus, if the controller 50 does not perform the second control operation, then the voltage across each of the first switching elements 1U, 1V has not decreased to zero by the end time of the dead time period corresponding to each of the U- and V-phases. As a result, in the power converter 100, the first switching element 1U, 1V is switched by hard switching.

On the other hand, if the controller 50 has performed the second control operation, then the voltage V2u, V2v across the second switching element 2U, 2V rises to Vd at a point in time when the control signal SU1, SV1 makes a transition from the low-level period to the high-level period (i.e., at the end time of the dead time period corresponding to each of the U- and V-phases). That is to say, if the controller 50 has performed the second control operation, then the resonant capacitor 9U, 9V is charged fully at the end time of the dead time period corresponding to each of the U- and V-phases. Thus, if the controller 50 has performed the second control operation, the first switching element 1U, 1V is switched by zero-voltage soft switching in the power converter 100.

Also, if two-phase resonant currents are determined to overlap with each other, then two control signals for two switches 8 need to overlap with each other at least partially. In that case, neither the temporal relation between control signals for the first switching elements 1 nor the temporal relation between control signals for the second switching elements 2 is particularly limited. For example, as shown in FIG. 14, the beginning time of the high-level period of the control signal SV1 may be earlier than the beginning time of the high-level period of the control signal SU1 and the beginning time of the high-level period of the control signal SV6 may be earlier than the beginning time of the high-level period of the control signal SU6.

In the example shown in FIG. 14, the controller 50 shifts, when performing the second control information, the high-level period of the control signal SV6 by the shifted time Tsv in such a direction as to advance the high-level period of the control signal SV6. The shifted time Tsv is as long as the time lag ΔTuv.

In the power converter 100, making the controller 50 perform the second control operation when the inequality Tov > ΔTuv is satisfied allows the shifted time Tsv to be shortened compared to a situation where the controller 50 shifts, by the length of the overlap period Tov, the high-level period of the control signal SV6 in such a direction as to postpone the high-level period of the control signal SV6 when the inequality Tov > ΔTuv is satisfied, thus causing a decrease in the current distortion (refer to FIG. 13) of the output current iV within one cycle of the carrier signal.

### (3.2.2.2) Operation of soft-switching second switching element

When the controller 50 soft-switches the second switching element 2, the high-level period and low-level period of each of the control signals SU1, SU2, SV1, SV2 that have not been shifted yet invert and the polarities of the load currents iU, iV and the current iL1 reverse compared to a situation where the controller 50 soft-switches the first switching element 1. In addition, when soft-switching the second switching element 2, the controller 50 shifts, by the shifted time, the high-level period of one of the control signals SU7, SV7 instead of the control signals SU6, SV6.

If the overlap period Tov is shorter than the time lag ΔTuv, then the controller 50 performs the first control operation. On the other hand, if the overlap period Tov is longer than the time lag ΔTuv, then the controller 50 performs the second control operation.

In this power converter 100, if the controller 50 performs neither the first control operation nor the second control operation, then the voltage V2u, V2v across the second switching element 2U, 2V has not decreased to zero by a point in time when the control signal SU2, SV2 makes a transition from the low-level period to the high-level period (i.e., by the end time of the dead time period Td corresponding to each of the U- and V-phases). That is to say, if the controller 50 does not perform the first control operation or the second control operation, then the discharging of the resonant capacitor 9U, 9V has not been done yet at the end time of the dead time period Td corresponding to each of the U- and V-phases. Thus, if the controller 50 does not perform the first control operation or the second control operation, then the voltage across none of the second switching elements 2U, 2V decreases to zero at the end time of the dead time period Td corresponding to each of the U- and V-phases. As a result, in the power converter 100, the second switching element 2U, 2V is switched by hard switching.

On the other hand, if the controller 50 has performed the first control operation or the second control operation, then the voltage V2u, V2v across the second switching element 2U, 2V decreases to zero at a point in time when the control signal SU2, SV2 makes a transition from the low-level period to the high-level period (i.e., at the end time of the dead time period Td corresponding to each of the U- and V-phases). That is to say, if the controller 50 has performed the first control operation or the second control operation, then discharging of the resonant capacitor 9U, 9V is finished at the end time of the dead time period Td corresponding to each of the U- and V-phases. Thus, if the controller 50 has performed the first control operation or the second control operation, the second switching element 2U, 2V is switched by zero-voltage soft switching in the power converter 100.

### (3.3) Operation to be performed when three-phase resonant currents are determined to flow simultaneously

No matter whether the power converter 100 according to the first embodiment performs the operation of soft-switching the first switching element 1 or the operation of soft-switching the second switching element 2, the controller 50 also performs either the first control operation or the second control operation when the controller 50 determines that three-phase resonant currents should overlap with each other.

Next, it will be described how the power converter 100 performs the operation of soft switching the first switching element 1 when the controller 50 has determined in advance that resonant currents respectively passing through three switches 8 belonging to the plurality of switches 8 should flow simultaneously through the resonant inductor L1.

When determining that the resonant currents respectively passing through three switches 8 belonging to the plurality of switches 8 should flow simultaneously through the resonant inductor L1, the controller 50 performs either the first control operation or the second control operation based on the overlap period Tov on two switches 8, through which load currents of the same polarity flow. In addition, the controller 50 stops the operation of the switch 8 corresponding to an AC terminal 41 of one phase associated with a load current of a different polarity. That is to say, the controller 50 reduces the high-level period of the control signal to zero within one cycle of the carrier. As used herein, the expression "when determining that the resonant currents respectively passing through three switches 8 belonging to the plurality of switches 8 should flow simultaneously" refers to a situation where it has been presumed in advance that the resonant currents respectively passing through the three switches 8 would flow simultaneously through the resonant inductor L1. The controller 50 determines that the three-phase resonant currents should flow simultaneously if, for example, the time lag between the beginning time of the high-level period of the control signal SU6 corresponding to the U-phase and the beginning time of the high-level period of the control signal SV6 corresponding to the V-phase, the time lag between the beginning time of the high-level period of the control signal SV6 corresponding to the V-phase and the beginning time of the high-level period of the control signal SW6 corresponding to the W-phase, and the time lag between the beginning time of the high-level period of the control signal SW6 corresponding to the W-phase and the beginning time of the high-level period of the control signal SU6 corresponding to the U-phase are all less than a threshold value. When the controller 50 determines that resonant currents passing respectively through three switches 8 belonging to the plurality of switches 8 should flow simultaneously, one of two switches 8 corresponding one to one to two AC terminals 41 associated with load currents of the same polarity is regarded as a first switch and the other switch is regarded as a second switch.

Supposing the capacitance of each of the plurality of resonant capacitors 9U, 9V, and 9W is C, if a U-phase current, a V-phase current, and a W-phase current flow simultaneously through the resonant inductor L1, a capacitor having a combined capacitance (= 3 × C) of the resonant capacitor 9U, the resonant capacitor 9V, and the resonant capacitor 9W is connected to the resonant inductor L1 in series in an equivalent circuit. Thus, in the power converter 100, if three-phase currents flow simultaneously through the resonant inductor L1, then the resonant frequency of a resonant circuit including the resonant inductor L1 changes compared to a situation where a single-phase current flows through the resonant inductor L1. Consequently, the power converter 100 may be unable to make zero-voltage soft switching.

In contrast, in the power converter 100, if the controller 50 has determined in advance that three-phase resonant currents, namely, U-, V-, and W-phase resonant currents, should flow simultaneously, the controller 50 performs either the first control operation or the second control operation, thus allowing the current distortion of the load current (output current) flowing through one AC terminal 41 corresponding to one of the two switches 8 to be reduced while soft-switching two target switching elements corresponding to the two switches.

When performing the operation of soft switching the second switching element 2, the controller 50 also performs either the first control operation or the second control operation based on the overlap period Tov on two switches 8, through which load currents of the same polarity flow. In addition, the controller 50 stops the operation of the switch 8 corresponding to an AC terminal 41 of one phase associated with a load current of a different polarity.

### (4) Advantages

In the power converter 100 according to the first embodiment, the controller 50 performs either a first control operation or a second control operation based on an overlap period Tov in which the resonant currents passing respectively through two or more switches 8 flow simultaneously. The first control operation is the operation of shifting the high-level period of a control signal for at least one switch 8 out of the two or more switches 8 to prevent the resonant currents passing respectively through the two or more switches 8 from flowing simultaneously through the resonant inductor L1. The second control operation is the operation of shifting the high-level period of a control signal for at least one switch 8 out of the two or more switches 8 to cause the respective high-level periods of control signals to be applied to the two or more switches 8, respectively, to overlap with each other for at least a predetermined period during a dead time period corresponding to each of two or more switching circuits 10 connected respectively to the two or more switches 8 which belong to the plurality of switching circuits 10.

This configuration allows for reducing the current distortion. More specifically, the controller 50 performs either the first control operation or the second control operation based on the overlap period Tov in which the resonant currents passing respectively through two or more switches 8 flow simultaneously. This allows for reducing the current distortion of the load currents (output currents) while realizing soft switching.

In addition, in the power converter 100 according to the first embodiment, either the first switching element 1 or the second switching element 2 designated as a target of zero-voltage soft switching in one switching circuit 10 belonging to the two or more switching circuits 10 is supposed to be a "first target switching element". Either the first switching element 1 or the second switching element 2 designated as a target of zero-voltage soft switching in another switching circuit 10, other than the one switching circuit 10 including the first target switching element, belonging to the two or more switching circuits 10 is supposed to be a "second target switching element" A time lag between a beginning time of the high-level period of a control signal for the first target switching element and a beginning time of the high-level period of a control signal for the second target switching element is supposed to be ΔT. In that case, the controller 50 performs the first control operation when the overlap period Tov of the resonant currents is shorter than ΔT and performs the second control operation when the overlap period Tov of the resonant currents is equal to or longer than ΔT.

This configuration may reduce the magnitude of shift of the high-level period of the control signal and thereby reduce the current distortion.

Also, in the power converter 100 according to the first embodiment, one of the two or more switches 8 is supposed to be a "first switch" and another one of the two or more switches 8 which is different from the first switch is supposed to be a "second switch." In that case, when performing the first control operation, the controller 50 shifts the high-level period of a control signal for one of the first switch or the second switch to cause a resonant current passing through the second switch to start flowing from a point in time when a current value of the resonant current passing through the first switch agrees with a current value of a load current flowing through an AC terminal 41 corresponding to the first switch which belongs to the two or more AC terminals 41 after the current value of the resonant current passing through the first switch has reached an extreme value.

This configuration may reduce the magnitude of shift of the high-level period of the control signal and thereby contribute to increasing the operating frequency.

### (Second embodiment)

### (1) Circuit configuration for power converter

The circuit configuration of a power converter 100 according to a second embodiment is the same as that of the power converter 100 (refer to FIG. 1) according to the first embodiment described above, and therefore, illustration and description thereof will be omitted herein.

### (2) Operation of power converter

In the following description, a situation where it is presumed that the resonant current flowing through the U-phase switch 8U and the resonant current flowing through the V-phase switch 8V would overlap with each other in the resonant inductor L1 will be described as an example. The same statement applies to the combination of the U- and W-phases and the combination of the V- and W-phases as well.

### (2.1) Operation of soft-switching first switching element

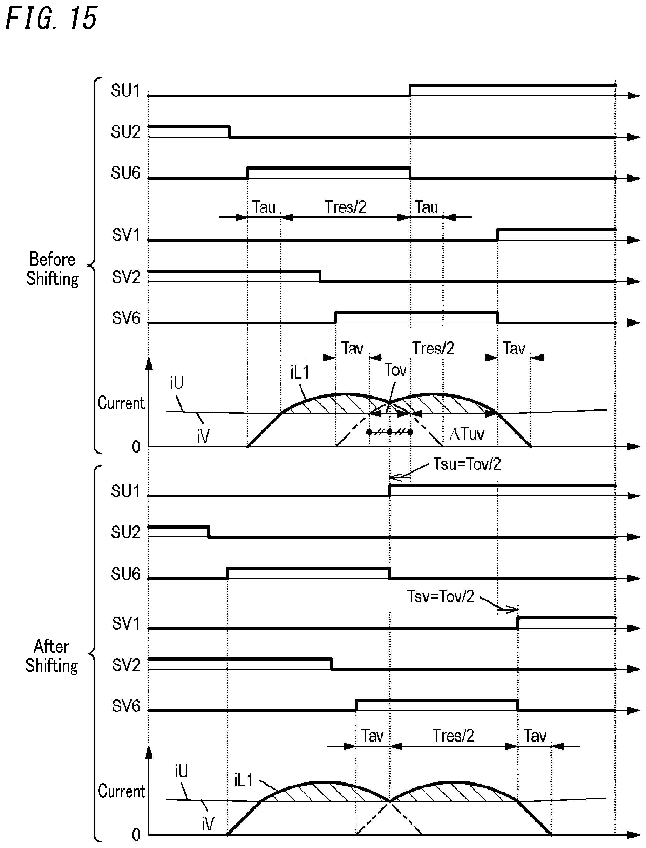

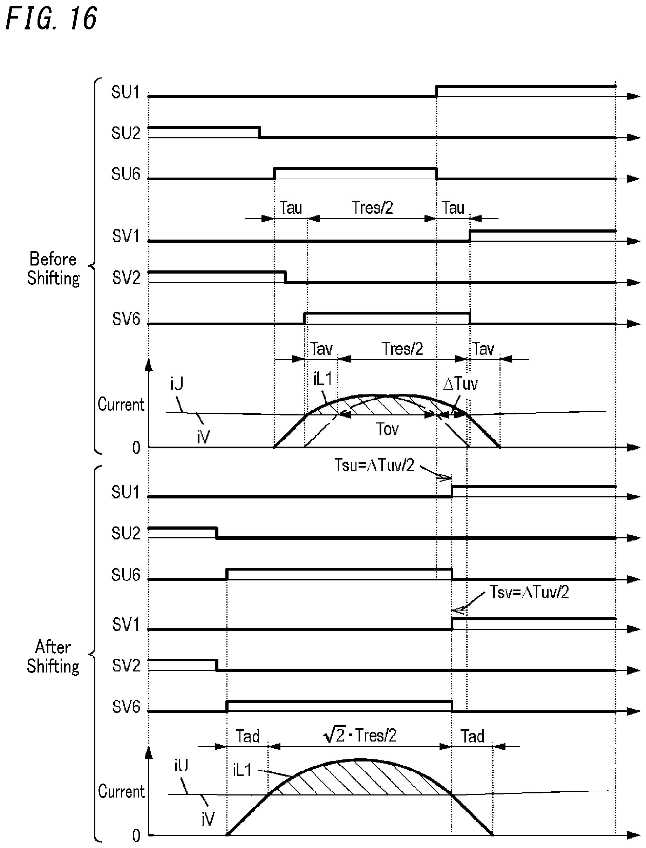

Next, it will be described with reference to FIGS. 15 and 16 how the power converter 100 according to the second embodiment operates to soft-switch the first switching element 1. FIG. 15 is a timing chart illustrating how the power converter 100 according to the second embodiment operates in a situation where its controller 50 performs the first control operation. FIG. 16 is a timing chart illustrating how the power converter 100 according to the second embodiment operates in a situation where its controller 50 performs the second control operation. FIGS. 15 and 16 may be interpreted in the same way as in FIGS. 12 and 14, respectively, and therefore, description thereof will be omitted herein.

If the overlap period Tov is shorter than the time lag ΔTuv, then the controller 50 performs the first control operation. In the example illustrated in FIG. 15, the time lag ΔTuv is longer than the overlap period Tov. When performing the first control operation, the controller 50 shifts the respective high-level periods of the control signals SU6, SV6 in mutually opposite directions. In the example shown in FIG. 15, the controller 50 shifts the high-level period of the control signal SU6 by the shifted time Tsv in such a direction as to advance the end time of the high-level period of the control signal SU6 and shifts the high-level period of the control signal SV6 by the shifted time Tsv in such a direction as to postpone the end time of the high-level period of the control signal SV6. Thus, the controller 50 shifts the high-level period of the control signal SU1 by the shifted time Tsu in such a direction as to advance the beginning time of the high-level period of the control signal SU1. In addition, the controller 50 also shifts the high-level period of the control signal SV1 by the shifted time Tsv in such a direction as to postpone the beginning time of the high-level period of the control signal SV1. The shifted time Tsu is as long as Tov/2. The shifted time Tsv is also as long as Tov/2.

In the power converter 100 according to the second embodiment, the controller 50 performs the first control operation, thus eliminating the overlap period Tov between the U-phase resonant current and the V-phase resonant current as shown in FIG. 15. This allows the first switching elements 1U, 1V to be subjected to zero-voltage soft switching.

If the overlap period Tov is longer than the time lag ΔTuv, then the controller 50 performs the second control operation.

In the example illustrated in FIG. 16, the time lag ΔTuv is shorter than the overlap period Tov. When performing the second control operation, the controller 50 shifts the respective high-level periods of the control signals SU6, SV6 in mutually opposite directions. In the example shown in FIG. 16, the controller 50 shifts the high-level period of the control signal SU6 by the shifted time Tsu in such a direction as to postpone the end time of the high-level period of the control signal SU6 and shifts the high-level period of the control signal SV6 by the shifted time Tsv in such a direction as to advance the end time of the high-level period of the control signal SV6. Thus, the controller 50 shifts the high-level period of the control signal SU1 by the shifted time Tsu in such a direction as to postpone the beginning time of the high-level period of the control signal SU1. In addition, the controller 50 also shifts the high-level period of the control signal SV1 by the shifted time Tsv in such a direction as to advance the beginning time of the high-level period of the control signal SV1. The shifted time Tsu is as long as ΔTuv/2. The shifted time Tsv is also as long as ΔTuv/2.

In the power converter 100 according to the second embodiment, the controller 50 performs the second control operation, thus allowing the first switching elements 1U, 1V to be subjected to zero-voltage soft switching as in the situation where the controller 50 performs the second control operation in the power converter 100 according to the first embodiment.

### (2.2) Operation of soft-switching second switching element

When the controller 50 soft-switches the second switching element 2, the high-level period and low-level period of each of the control signals SU1, SU2, SV1, SV2 that have not been shifted yet invert and the polarities of the load currents iU, iV and the current iL1 reverse compared to a situation where the controller 50 soft-switches the first switching element 1. In addition, when soft-switching the second switching element 2, the controller 50 shifts the respective high-level periods of the control signals SU7, SV7 in mutually opposite directions instead of the control signals SU6, SV6.

In the power converter 100 according to the second embodiment, the controller 50 performs either the first control operation or the second control operation, thus discharging electricity from the resonant capacitor 9U, 9V completely at a point in time when the dead time period corresponding to each of the U- and V-phases ends. Thus, in the power converter 100, if the controller 50 has performed either the first control operation or the second control operation, the second switching element 2U, 2V is subjected to zero-voltage soft switching.

### (3) Advantages

In the power converter 100 according to the second embodiment, as well as in the power converter 100 according to the first embodiment, the controller 50 also performs either the first control operation or the second control operation based on the overlap period Tov in which the resonant currents passing respectively through two or more switches 8 flow simultaneously, thus allowing the current distortion to be reduced.

In addition, in the power converter 100 according to the second embodiment, when performing the first control operation, the controller 50 shifts the respective high-level periods of the control signals for the two switches 8 in mutually opposite directions and sets the shifted time, by which the respective high-level periods of the two control signals are shifted, at the same length, thus allowing for reducing not only the current distortions of the load currents of the respective phases but also the dispersion between the load currents of the respective phases as well compared to the first embodiment.

Furthermore, in the power converter 100 according to the second embodiment, when performing the second control operation, the controller 50 shifts the respective high-level periods of the control signals for the two switches 8 in mutually opposite directions and sets the shifted time, by which the respective high-level periods of the two control signals are shifted, at the same length, thus allowing for reducing not only the current distortions of the load currents of the respective phases but also the dispersion between the load currents of the respective phases as well compared to the first embodiment.

### (Third embodiment)

### (1) Circuit configuration for power converter

The circuit configuration of a power converter 100 according to a third embodiment is the same as that of the power converter 100 (refer to FIG. 1) according to the first embodiment described above, and therefore, illustration and description thereof will be omitted herein.

### (2) Operation of power converter

In the following description, a situation where it is presumed that the resonant current flowing through the U-phase switch 8U and the resonant current flowing through the V-phase switch 8V would overlap with each other in the resonant inductor L1 will be described as an example. The same statement applies to the combination of the U- and W-phases and the combination of the V- and W-phases as well.

### (2.1) Operation of soft-switching first switching element

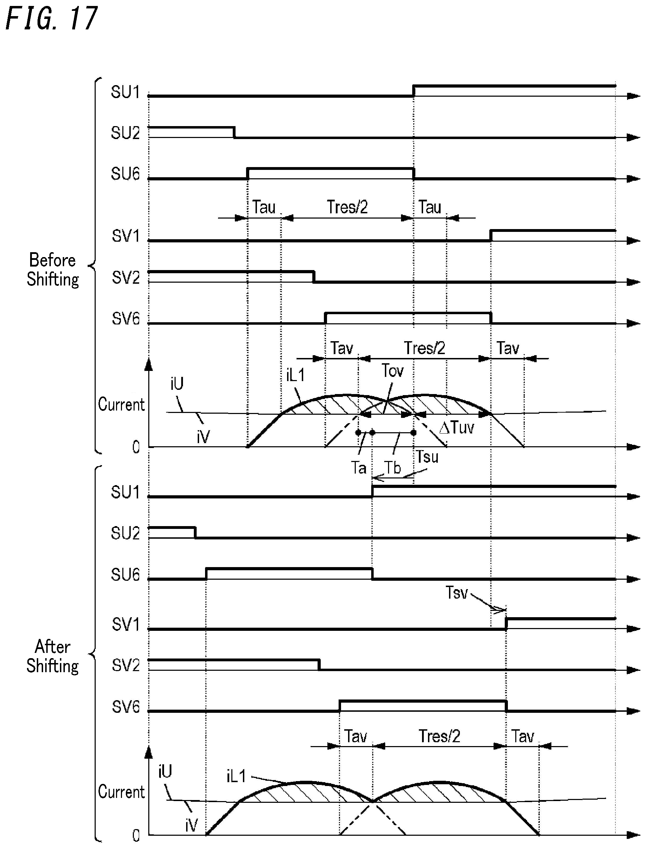

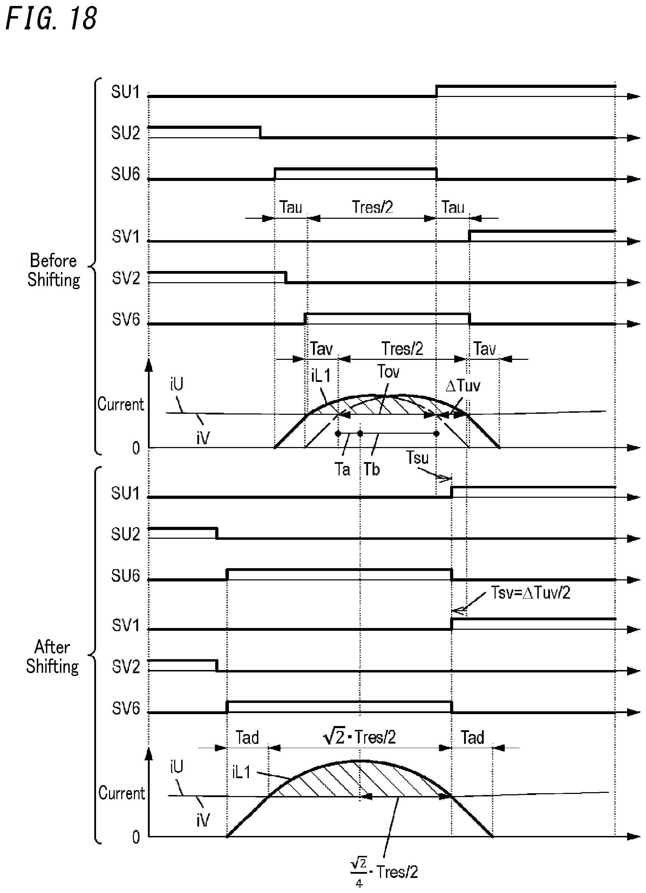

Next, it will be described with reference to FIGS. 17 and 18 how the power converter 100 according to the third embodiment operates to soft-switch the first switching element 1. FIG. 17 is a timing chart illustrating how the power converter 100 according to the third embodiment operates in a situation where its controller 50 performs the first control operation. FIG. 18 is a timing chart illustrating how the power converter 100 according to the third embodiment operates in a situation where its controller 50 performs the second control operation. FIGS. 17 and 18 may be interpreted in the same way as in FIGS. 12 and 14, respectively, and therefore, description thereof will be omitted herein.

If the overlap period Tov is shorter than the time lag ΔTuv, then the controller 50 performs the first control operation. In the example illustrated in FIG. 17, the time lag ΔTuv is longer than the overlap period Tov. When performing the first control operation, the controller 50 shifts the respective high-level periods of the control signals SU6, SV6 in mutually opposite directions. In the example shown in FIG. 17, the controller 50 shifts the high-level period of the control signal SU6 by the shifted time Tsu in such a direction as to advance the end time of the high-level period of the control signal SU6 and shifts the high-level period of the control signal SV6 by the shifted time Tsv in such a direction as to postpone the end time of the high-level period of the control signal SV6. Thus, the controller 50 shifts the high-level period of the control signal SU1 by the shifted time Tsu in such a direction as to advance the beginning time of the high-level period of the control signal SU1. In addition, the controller 50 also shifts the high-level period of the control signal SV1 by the shifted time Tsv in such a direction as to postpone the beginning time of the high-level period of the control signal SV1. If Tov = Ta + Tb, then the length of the shifted time Tsu is Tov▪Tb / (Ta + Tb). The shifted time Tsv is as long as Tov▪Ta / (Ta + Tb). Each of Ta and Tb may be set at any suitable value.

In the power converter 100 according to the third embodiment, the controller 50 performs the first control operation, thus eliminating the overlap period Tov between the U-phase resonant current and the V-phase resonant current which have not been subjected to shifting yet, as indicated in the lower part of FIG. 17 by the waveform of the current iL1 which has been subjected to shifting. This allows the first switching elements 1U, 1V to be subjected to zero-voltage soft switching.

If the overlap period Tov is longer than the time lag ΔTuv, then the controller 50 performs the second control operation.

In the example illustrated in FIG. 18, the time lag ΔTuv is shorter than the overlap period Tov. When performing the second control operation, the controller 50 shifts the respective high-level periods of the control signals SU6, SV6 in mutually opposite directions. The controller 50 shifts the high-level period of the control signal SU6 (of which the high-level period has a phase lead with respect to the other control signal SV6 out of the two control signals SU6, SV6 within one cycle of the carrier signal) by the shifted time Tsu in such a direction as to postpone the end time of the high-level period of the control signal SU6 and shifts the high-level period of the control signal SV6 (of which the high-level period has a phase lag with respect to the other control signal SU6 within one cycle of the carrier signal) by the shifted time Tsv in such a direction as to advance the end time of the high-level period of the control signal SV6. Thus, the controller 50 shifts the high-level period of the control signal SU1 by the shifted time Tsu in such a direction as to postpone the beginning time of the high-level period of the control signal SU1. In addition, the controller 50 also shifts the high-level period of the control signal SV1 by the shifted time Tsv in such a direction as to advance the beginning time of the high-level period of the control signal SV1. The shifted time Tsu has a length calculated by (√2/4)▪Tres - Tov▪Tb / (Ta + Tb). The shifted time Tsv has a length calculated by Tov▪Tb / (Ta + Tb) + ΔTuv - (√2/4)▪Tres. Note that √2 indicates the root of 2 (i.e., √2 = 1.41421356...).

In the power converter 100 according to the third embodiment, the controller 50 performs the second control operation, thus allowing the first switching elements 1U, 1V to be subjected to zero-voltage soft switching as in the situation where the controller 50 performs the second control operation in the power converter 100 according to the first embodiment.

### (2.2) Operation of soft-switching second switching element

When the controller 50 soft-switches the second switching element 2, the high-level period and low-level period of each of the control signals SU1, SU2, SV1, SV2 that have not been shifted yet invert and the polarities of the load currents iU, iV and the current iL1 reverse compared to a situation where the controller 50 soft-switches the first switching element 1. In addition, when soft-switching the second switching element 2, the controller 50 shifts the respective high-level periods of the control signals SU7, SV7 in mutually opposite directions instead of the control signals SU6, SV6.

In the power converter 100 according to the third embodiment, the controller 50 performs either the first control operation or the second control operation, thus discharging electricity from the resonant capacitor 9U, 9V completely at a point in time when the dead time period corresponding to each of the U- and V-phases ends. Thus, in the power converter 100, if the controller 50 has performed either the first control operation or the second control operation, the second switching element 2U, 2V is subjected to zero-voltage soft switching.

### (3) Advantages

In the power converter 100 according to the third embodiment, as well as in the power converter 100 according to the first embodiment, the controller 50 also performs either the first control operation or the second control operation based on the overlap period Tov in which the resonant currents passing respectively through two or more switches 8 flow simultaneously, thus allowing the current distortion to be reduced.

In addition, in the power converter 100 according to the third embodiment, when performing the first control operation, the controller 50 shifts the respective high-level periods of the control signals for the two switches 8 in mutually opposite directions, thus allowing for reducing not only the current distortions of the load currents of the respective phases but also the dispersion between the load currents of the respective phases as well compared to the first embodiment.

Furthermore, in the power converter 100 according to the second embodiment, when performing the second control operation, the controller 50 shifts the respective high-level periods of the control signals for the two switches 8 in mutually opposite directions, thus allowing for reducing not only the current distortions of the load currents of the respective phases but also the dispersion between the load currents of the respective phase as well compared to the first embodiment.

### (Fourth embodiment)

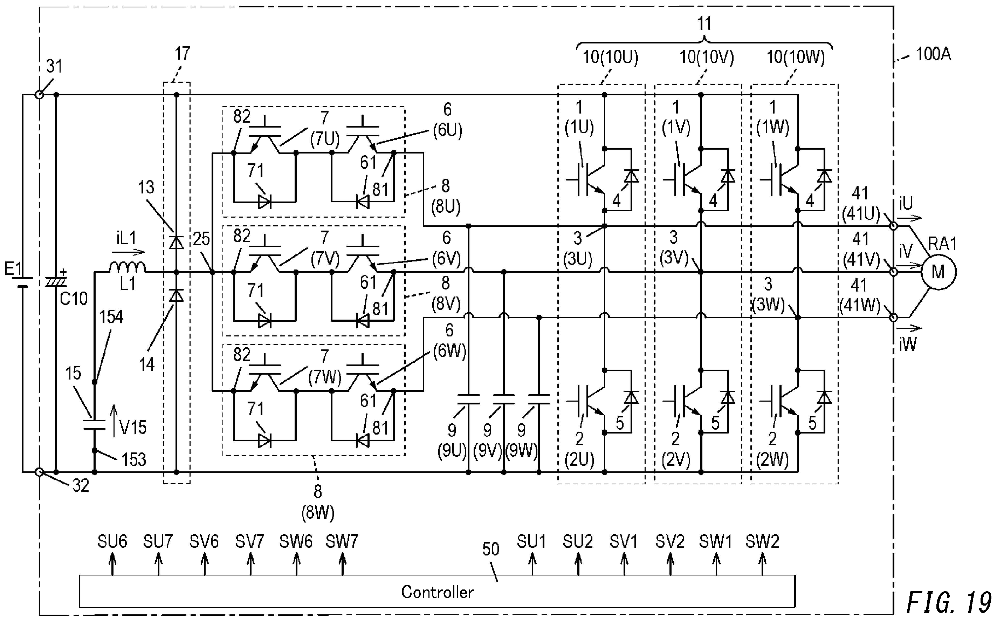

A power converter 100A according to a fourth embodiment will be described with reference to FIG. 19. FIG. 19 is a circuit diagram of a system including a power converter 100A according to the fourth embodiment. In the following description, any constituent element of the power converter 100A according to the fourth embodiment, having the same function as a counterpart of the power converter 100 according to the first embodiment described above, will be designated by the same reference numeral as that counterpart's, and description thereof will be omitted herein.

In the power converter 100A according to the fourth embodiment, in each of the plurality of switches 8, first IGBT 6 and second IGBT 7 thereof are connected in anti-series. In the power converter 100A according to the fourth embodiment, in each of the plurality of switches 8, a collector terminal of the first IGBT 6 and a collector terminal of the second IGBT 7 are connected to each other, an emitter terminal of the first IGBT 6 is connected to the connection node 3 of a corresponding one of the plurality of switching circuits 10, and an emitter terminal of the second IGBT 7 is connected to the common connection node 25. In addition, each of the plurality of switches 8 further includes a diode 61 connected to the first IGBT 6 in antiparallel and a diode 71 connected to the second IGBT 7 in antiparallel.

In the power converter 100A according to the fourth embodiment, each of the first IGBT 6 and the second IGBT 7 may be replaced with either a MOSFET (metal-oxide semiconductor field effect transistor) or a bipolar transistor. In that case, the diode 61 and diode 71 shown in FIG. 19 may each be replaced with, for example, either a parasitic diode of the replacement element or an element built in one chip of the replacement element. Also, in the power converter 100A according to the fourth embodiment, the diode 61 and the diode 71 do not have to be provided as external elements for the first IGBT 6 and the second IGBT 7, respectively, but may also be elements built in one chip.

The controller 50 may operate in the same way as, for example, the controller 50 according to the first embodiment. However, this is only an example and should not be construed as limiting. Alternatively, the controller 50 may also operate in the same way as the controller 50 according to the second embodiment or the third embodiment and may also perform any of these operations in combination.

The power converter 100A according to the fourth embodiment, as well as the power converter 100 according to the first embodiment, may also reduce the current distortion.

### (Fifth embodiment)

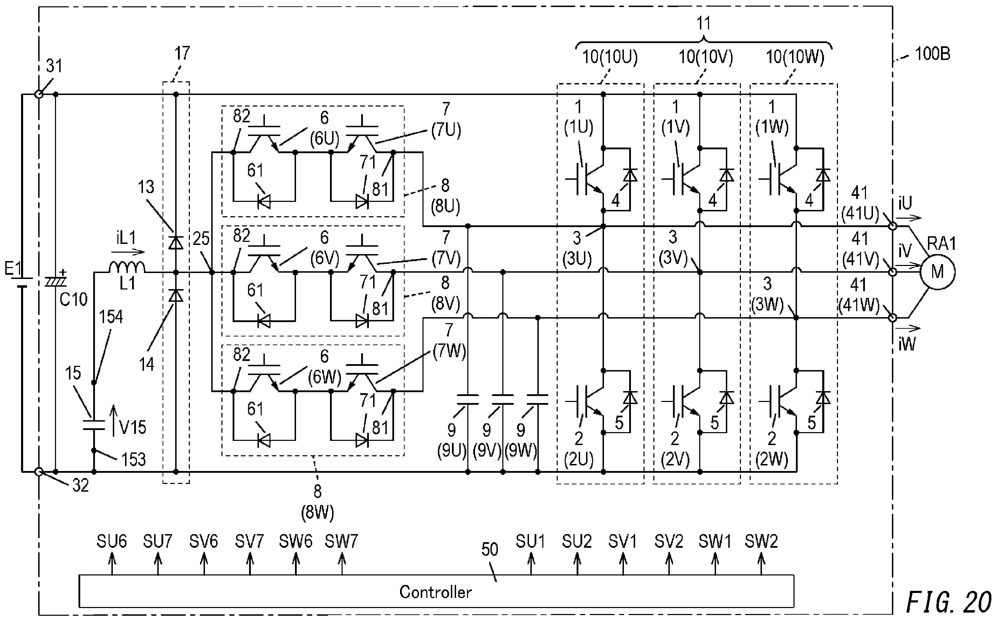

A power converter 100B according to a fifth embodiment will be described with reference to FIG. 20. FIG. 20 is a circuit diagram of a system including a power converter 100B according to the fifth embodiment. In the following description, any constituent element of the power converter 100B according to the fifth embodiment, having the same function as a counterpart of the power converter 100 according to the first embodiment described above, will be designated by the same reference numeral as that counterpart's, and description thereof will be omitted herein.

In the power converter 100B according to the fifth embodiment, in each of the plurality of switches 8, first IGBT 6 and second IGBT 7 thereof are connected in anti-series. In the power converter 100B according to the fifth embodiment, in each of the plurality of switches 8, an emitter terminal of the first IGBT 6 and an emitter terminal of the second IGBT 7 are connected to each other, a collector terminal of the second IGBT 7 is connected to the connection node 3 of a corresponding one of the plurality of switching circuits 10, and a collector terminal of the first IGBT 6 is connected to the common connection node 25. In addition, each of the plurality of switches 8 further includes a diode 61 connected to the first IGBT 6 in antiparallel and a diode 71 connected to the second IGBT 7 in antiparallel.

In the power converter 100B according to the fifth embodiment, each of the first IGBT 6 and the second IGBT 7 may be replaced with either a MOSFET or a bipolar transistor. In that case, the diode 61 and diode 71 shown in FIG. 20 may each be replaced with, for example, either a parasitic diode of the replacement element or an element built in one chip of the replacement element. Also, in the power converter 100B according to the fifth embodiment, the diode 61 and the diode 71 do not have to be provided as external elements for the first IGBT 6 and the second IGBT 7, respectively, but may also be elements built in one chip.

The controller 50 may operate in the same way as, for example, the controller 50 according to the first embodiment. However, this is only an example and should not be construed as limiting. Alternatively, the controller 50 may also operate in the same way as the controller 50 according to the second embodiment or the third embodiment.

The power converter 100B according to the fifth embodiment, as well as the power converter 100 according to the first embodiment, may also reduce the current distortion.

### (Sixth embodiment)

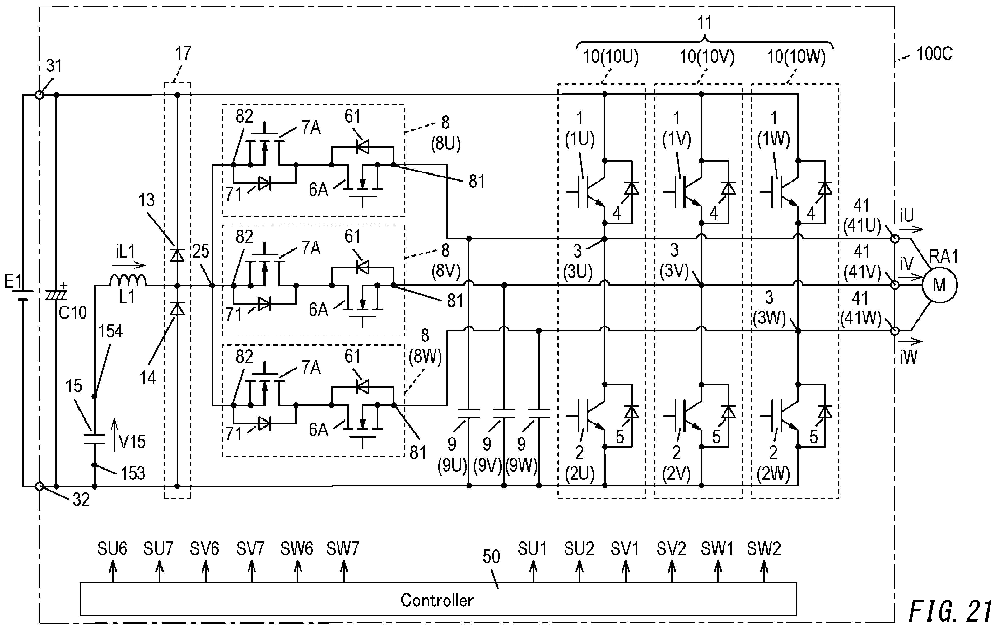

A power converter 100C according to a sixth embodiment will be described with reference to FIG. 21. FIG. 21 is a circuit diagram of a system including a power converter 100C according to the sixth embodiment. In the following description, any constituent element of the power converter 100C according to the sixth embodiment, having the same function as a counterpart of the power converter 100 according to the first embodiment described above, will be designated by the same reference numeral as that counterpart's, and description thereof will be omitted herein.

In the power converter 100C according to the sixth embodiment, in each of the plurality of switches 8, a first MOSFET 6A and a second MOSFET 7A are connected in anti-series. In the power converter 100C according to the sixth embodiment, in each of the plurality of switches 8, a drain terminal of the first MOSFET 6A and a drain terminal of the second MOSFET 7A are connected to each other. In addition, each of the plurality of switches 8 further includes a diode 61 connected to the first MOSFET 6A in antiparallel and a diode 71 connected to the second MOSFET 7A in antiparallel. In each of the plurality of switches 8, a source terminal of the second MOSFET 7A is connected to the common connection node 25. In each of the plurality of switches 8, a source terminal of the first MOSFET 6A is connected to the connection node 3 of a switching circuit 10 corresponding to the switch 8 including the first MOSFET 6A. Control signals SU6, SU7 are respectively applied from the controller 50 to the first MOSFET 6A and second MOSFET 7A of the switch 8U. Control signals SV6, SV7 are respectively applied from the controller 50 to the first MOSFET 6A and second MOSFET 7A of the switch 8V. Control signals SW6, SW7 are respectively applied from the controller 50 to the first MOSFET 6A and second MOSFET 7A of the switch 8W.

The controller 50 may operate in the same way as, for example, the controller 50 according to the first embodiment. However, this is only an example and should not be construed as limiting. Alternatively, the controller 50 may also operate in the same way as the controller 50 according to the second embodiment or the third embodiment and may also perform any of these operations in combination.

The power converter 100C according to the sixth embodiment, as well as the power converter 100 according to the first embodiment, may also reduce the current distortion.

### (Seventh embodiment)

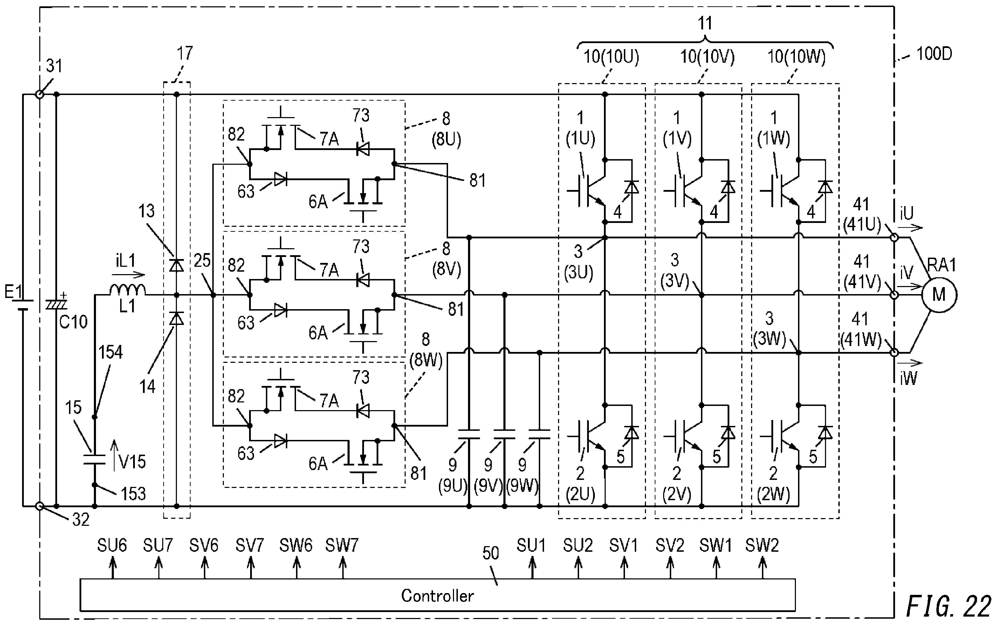

A power converter 100D according to a seventh embodiment will be described with reference to FIG. 22. FIG. 22 is a circuit diagram of a system including a power converter 100D according to the seventh embodiment. In the following description, any constituent element of the power converter 100D according to the seventh embodiment, having the same function as a counterpart of the power converter 100 according to the first embodiment described above, will be designated by the same reference numeral as that counterpart's, and description thereof will be omitted herein.

In the power converter 100D according to the seventh embodiment, in each of the plurality of switches 8, a diode 63 is connected to a first MOSFET 6A in series and a diode 73 is connected to a second MOSFET 7A in series. In the power converter 100D according to the seventh embodiment, a series circuit of the first MOSFET 6A and the diode 63 and a series circuit of the second MOSFET 7A and the diode 73 are connected to each other in antiparallel.

The controller 50 may operate in the same way as, for example, the controller 50 according to the first embodiment. However, this is only an example and should not be construed as limiting. Alternatively, the controller 50 may also operate in the same way as the controller 50 according to the first embodiment or the second embodiment and may also perform any of these operations in combination.

The power converter 100D according to the seventh embodiment, as well as the power converter 100 according to the first embodiment, may also reduce the current distortion.

### (Eighth embodiment)

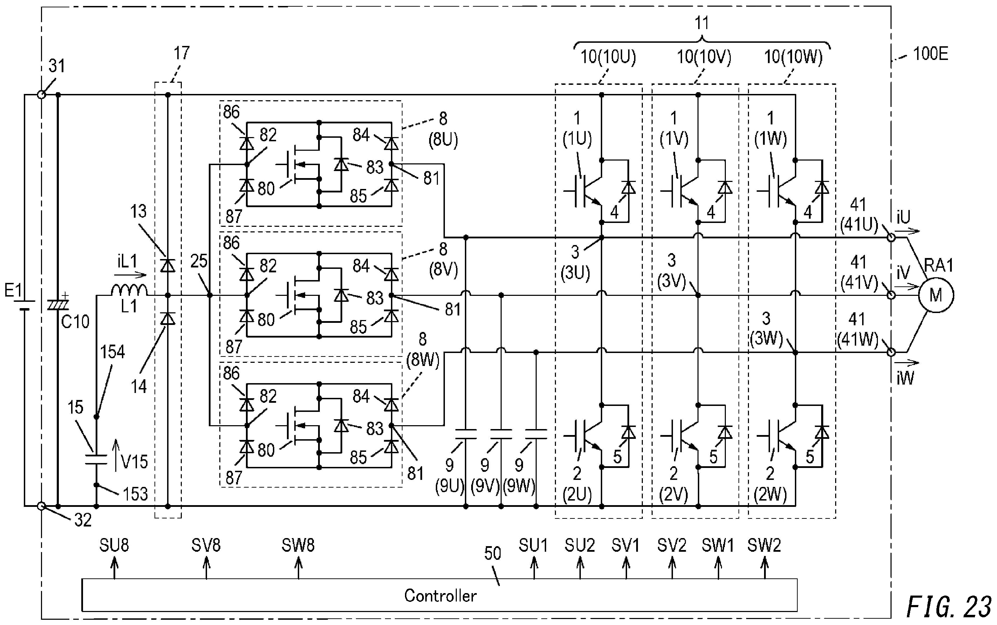

A power converter 100E according to an eighth embodiment will be described with reference to FIG. 23. FIG. 23 is a circuit diagram of a system including a power converter 100E according to the eighth embodiment. In the following description, any constituent element of the power converter 100E according to the eighth embodiment, having the same function as a counterpart of the power converter 100 according to the first embodiment described above, will be designated by the same reference numeral as that counterpart's, and description thereof will be omitted herein.

In the power converter 100E according to the eighth embodiment, each of the plurality of switches 8 includes: a single MOSFET 80; a diode 83 connected to the MOSFET 80 in antiparallel; a series circuit of two diodes 84, 85 connected to the MOSFET 80 in antiparallel; and a series circuit of two diodes 86, 87 connected to the MOSFET 80 in antiparallel. In each of the plurality of switches 8, a connection node between the diodes 84, 85 in the switch 8 (i.e., a first end of the switch 8) is connected to the connection node 3 of a corresponding one of the plurality of switching circuits 10, and a connection node between the diodes 86, 87 (i.e., a second end of the switch 8) is connected to the common connection node 25. In each of the switches 8, when the MOSFET 80 is ON, the switch 8 is ON. On the other hand, when the MOSFET 80 is OFF, the switch 8 is OFF.

The MOSFETs 80 of the plurality of switches 8 are controlled by the controller 50. The controller 50 outputs a control signal SU8 for controlling the ON/OFF states of the MOSFET 80 of the switch 8U, a control signal SV8 for controlling the ON/OFF states of the MOSFET 80 of the switch 8V, and a control signal SW8 for controlling the ON/OFF states of the MOSFET 80 of the switch 8W.

In each of the switches 8, when its MOSFET 80 is ON, a resonant current produced by a resonant circuit including the resonant inductor L1 and a corresponding one of the resonant capacitors 9 flows. In the power converter 100E, a charging current including the resonant current flows, when one of the plurality of switches 8 is ON, along the path passing through the regenerative capacitor 15, the resonant inductor L1, the diode 86, the MOSFET 80, the diode 85, and the resonant capacitor 9 in this order. Also, in the power converter 100E, a discharging current including the resonant current flows, when one of the plurality of switches 8 is ON, along the path passing through the resonant capacitor 9, the diode 84, the MOSFET 80, the diode 87, the resonant inductor L1, and regenerative capacitor 15 in this order.

In the power converter 100E according to the eighth embodiment, each of the plurality of MOSFETs 80 may be replaced with an IGBT. Also, in the power converter 100E according to the eighth embodiment, each of the plurality of switches 8 may include, for example, a bipolar transistor or a GaN-based gate injection transistor (GIT) instead of the MOSFET 80.

The controller 50 may operate in the same way as, for example, the controller 50 according to the first embodiment. However, this is only an example and should not be construed as limiting. Alternatively, the controller 50 may also operate in the same way as the controller 50 according to the second embodiment or the third embodiment and may also perform any of these operations in combination.

The power converter 100E according to the eighth embodiment, as well as the power converter 100 according to the first embodiment, may also reduce the current distortion.

### (Ninth embodiment)

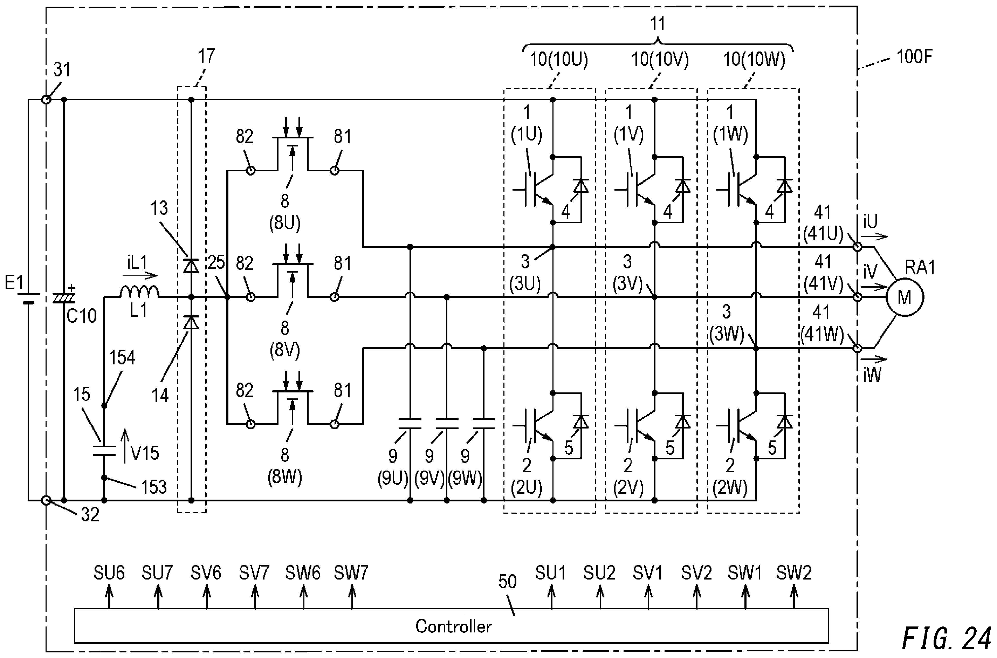

A power converter 100F according to a ninth embodiment will be described with reference to FIG. 24. FIG. 24 is a circuit diagram of a system including a power converter 100F according to the ninth embodiment. In the following description, any constituent element of the power converter 100F according to the ninth embodiment, having the same function as a counterpart of the power converter 100 according to the first embodiment described above, will be designated by the same reference numeral as that counterpart's, and description thereof will be omitted herein.

In the power converter 100F according to the ninth embodiment, each of the plurality of switches 8 is a dual-gate GaN-based GIT including a first source terminal, a first gate terminal, a second gate terminal, and a second source terminal. In the power converter 100F according to the ninth embodiment, a control signal SU6 is applied to between the first gate terminal and first source terminal of a dual-gate GaN-based GIT serving as the switch 8U, and a control signal SU7 is applied to between the second gate terminal and the second source terminal thereof. In addition, a control signal SV6 is applied to between the first gate terminal and first source terminal of a dual-gate GaN-based GIT serving as the switch 8V, and a control signal SV7 is applied to between the second gate terminal and the second source terminal thereof. Furthermore, a control signal SW6 is applied to between the first gate terminal and first source terminal of a dual-gate GaN-based GIT serving as the switch 8W, and a control signal SW7 is applied to between the second gate terminal and the second source terminal thereof.

The controller 50 may operate in the same way as, for example, the controller 50 according to the first embodiment. However, this is only an example and should not be construed as limiting. Alternatively, the controller 50 may also operate in the same way as the controller 50 according to the second embodiment or the third embodiment and may also perform any of these operations in combination.

The power converter 100F according to the ninth embodiment, as well as the power converter 100 according to the first embodiment, may also reduce the current distortion.

### (Tenth embodiment)

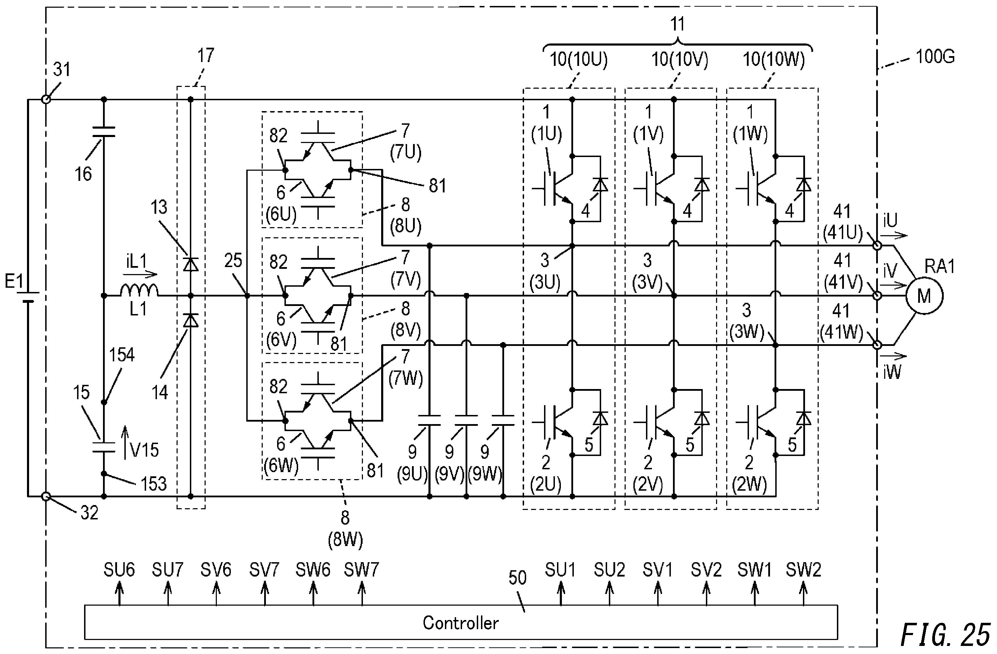

A power converter 100G according to a tenth embodiment will be described with reference to FIG. 25. FIG. 25 is a circuit diagram of a system including a power converter 100G according to the tenth embodiment. The power converter 100G according to the tenth embodiment further includes a capacitor 16 connected between the second end of the resonant inductor L1 and the first DC terminal 31, which is a difference from the power converter 100 according to the first embodiment. In the following description, any constituent element of the power converter 100G according to the tenth embodiment, having the same function as a counterpart of the power converter 100 according to the first embodiment described above, will be designated by the same reference numeral as that counterpart's, and description thereof will be omitted herein.

The power converter 100G does not include the capacitor C10 of the power converter 100 according to the first embodiment. The capacitor 16 is connected to the regenerative capacitor 15 in series. Thus, in this power converter 100G, a series circuit of the capacitor 16 and the regenerative capacitor 15 is connected between the first DC terminal 31 and the second DC terminal 32. The capacitance of the capacitor 16 is equal to the capacitance of the regenerative capacitor 15. As used herein, the expression "the capacitance of the capacitor 16 is equal to the capacitance of the regenerative capacitor 15" refers to not only a situation where the capacitance of the capacitor 16 is exactly equal to the capacitance of the regenerative capacitor 15 but also a situation where the capacitance of the capacitor 16 is equal to or greater than 95% and equal to or less than 105% of the capacitance of the regenerative capacitor 15 as well.

In the power converter 100G according to the tenth embodiment, the potential V15 at the fourth end 154 of the regenerative capacitor 15 has a value calculated by dividing the voltage value Vd of the DC power supply E1 by two that is the number of the capacitors, namely, the capacitor 16 and the regenerative capacitor 15. Thus, the potential V15 at the fourth end 154 of the regenerative capacitor 15 is approximately Vd/2. In the power converter 100G according to the tenth embodiment, the controller 50 may store in advance the value of the potential V15 at the fourth end 154 of the regenerative capacitor 15.

The controller 50 may operate in the same way as, for example, the controller 50 according to the first embodiment. However, this is only an example and should not be construed as limiting. Alternatively, the controller 50 may also operate in the same way as the controller 50 according to the second embodiment or the third embodiment and may also perform any of these operations in combination.

The power converter 100G according to the tenth embodiment, as well as the power converter 100 according to the first embodiment, may also reduce the current distortion.

### (Eleventh embodiment)

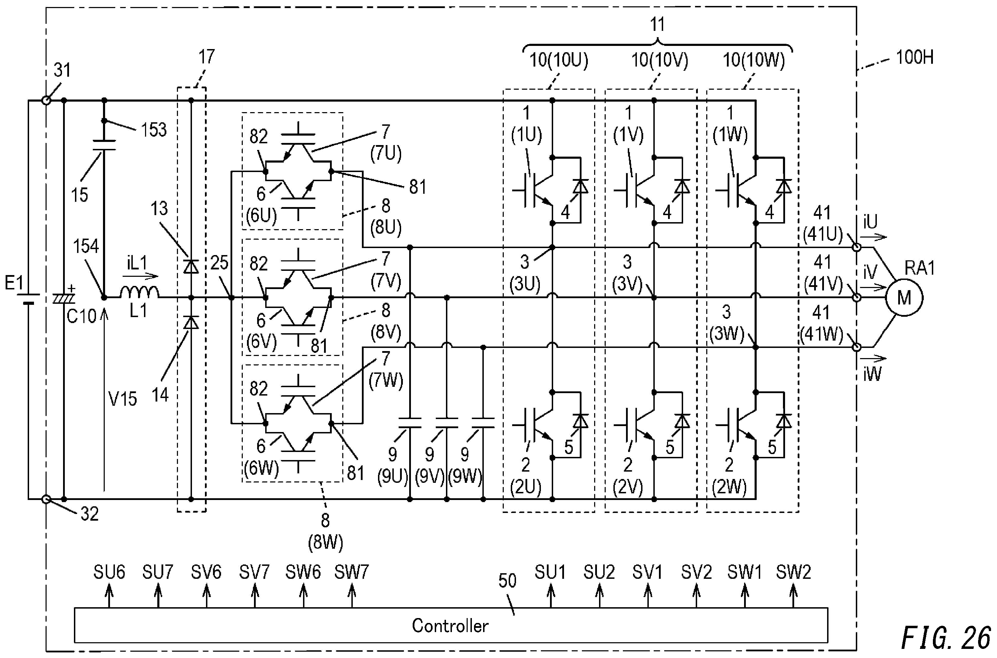

A power converter 100H according to an eleventh embodiment will be described with reference to FIG. 26. FIG. 26 is a circuit diagram of a system including a power converter 100H according to the eleventh embodiment. In the power converter 100H according to the eleventh embodiment, the regenerative capacitor 15 is connected between the second end of the resonant inductor L1 and the first DC terminal 31, which is a difference from the power converter 100 according to the first embodiment. In the following description, any constituent element of the power converter 100H according to this eleventh embodiment, having the same function as a counterpart of the power converter 100 according to the first embodiment described above, will be designated by the same reference numeral as that counterpart's, and description thereof will be omitted herein.

The controller 50 may operate in the same way as, for example, the controller 50 according to the first embodiment. However, this is only an example and should not be construed as limiting. Alternatively, the controller 50 may also operate in the same way as the controller 50 according to the second embodiment or the third embodiment and may also perform any of these operations in combination.

The power converter 100H according to the eleventh embodiment, as well as the power converter 100 according to the first embodiment, may also reduce the current distortion.

### (Variations)

Note that the first to eleventh embodiments and their variations described above are only exemplary ones of various embodiments of the present disclosure and their variations and should not be construed as limiting. Rather, the first to eleventh exemplary embodiments and their variations may be readily modified in various manners depending on a design choice or any other factor without departing from the scope of the present disclosure.

The operation performed by the controller 50 to "determine that a plurality of resonant currents should be going to flow simultaneously" is not limited to the operation of "determining that a plurality of resonant currents should be going to flow simultaneously" if the time lag described for the first embodiment is less than a threshold value.

Alternatively, the controller 50 may determine that two-phase resonant currents should be going to flow simultaneously if any one of the current difference between the U-phase load current iU and the V-phase load current iV, the current difference between the V-phase load current iV and the W-phase load current iW, or the current difference between the W-phase load current iW and the U-phase load current iU is less than a current difference threshold value.

Still alternatively, the controller 50 may determine that three-phase resonant currents should be going to flow simultaneously if the current difference between the U-phase load current iU and the V-phase load current iV, the current difference between the V-phase load current iV and the W-phase load current iW, and the current difference between the W-phase load current iW and the U-phase load current iU are all less than the current difference threshold value.

Yet alternatively, the controller 50 may determine "two-phase resonant currents should be going to flow simultaneously" if the electrical angle determined by calculation, or estimated, based on sensor information provided by a sensor device (such as an encoder or a resolver) for detecting the number of revolutions of a motor falls within a first rotational angle range (e.g., equal to or larger than 55 degrees and equal to or smaller than 65 degrees), or a second rotational angle range (e.g., equal to or larger than 115 degrees and equal to or smaller than 125 degrees), or a third rotational angle range (e.g., equal to or larger than 175 degrees and equal to or smaller than 185 degrees), or a fourth rotational angle range (e.g., equal to or larger than 235 degrees and equal to or smaller than 245 degrees), or a fifth rotational angle range (e.g., equal to or larger than 295 degrees and equal to or smaller than 305 degrees), or a sixth rotational angle range (e.g., equal to or larger than 355 degrees and equal to or smaller than 365 degrees).

For example, each of the plurality of first switching elements 1 and the plurality of second switching elements 2 does not have to be an IGBT but may also be a MOSFET. In that case, each of the plurality of first diodes 4 may also be replaced with, for example, a parasitic diode of a MOSFET serving as its corresponding first switching element 1. In addition, each of the plurality of second diodes 5 may also be replaced with, for example, a parasitic diode of a MOSFET serving as its corresponding second switching element 2. The MOSFET may be, for example, an Si-based MOSFET or an SiC-based MOSFET. Each of the plurality of first switching elements 1 and the plurality of second switching elements 2 may also be, for example, a bipolar transistor or a GaN-based GIT.

Optionally, in the power converters 100 and 100A-100H, if each of the plurality of resonant capacitors 9 has a relatively small capacitance, then the parasitic capacitors across the plurality of second switching elements 2 may also serve as the plurality of resonant capacitors 9 instead of providing the plurality of resonant capacitors 9 as separate elements.

The dead time period may also be set by a dead time generator circuit included in a gate driver integrated circuit (IC) provided separately from the controller 50. Alternatively, the controller 50 may include a gate driver IC and a dead time generator circuit included in the gate driver IC may set the dead time period.

Furthermore, the power converters 100 and 100A-100H do not have to be configured to output three-phase AC power but may also be configured to output multi-phase AC power in more than three phases. As for the method for determining the additional time Tau, Tav, Taw already described in the "(3.1) Basic example" section for the first embodiment, the equation cited above is an example of ideal design, and therefore, calculation is not always made using such an equation. Rather, as the case may be, there is no problem even if the additional time Tau, Tav, Taw is set at either 0 or any other fixed value. Also, as long as the object of providing the additional time Tau, Tav, Taw is achievable, the additional time Tau, Tav, Taw may also have a value calculated by any other equation. For example, in the basic example described above, the additional time Tau is calculated by the equation: Tau = iU × (L/V15). However, this is only an example and should not be construed as limiting. Alternatively, Tau may also be set at 0, may be set at a value falling within the range from 0 to iU × (L/V15), may be set at an always constant additional time, may be calculated by another equation, or may be set as a combination of these

### (Other examples)

### (First example)

### (1) Circuit configuration for power converter

The circuit configuration of a power converter 100 according to a first example is the same as that of the power converter 100 (refer to FIG. 1) according to the first embodiment described above, and therefore, illustration and description thereof will be omitted herein.

### (2) Operation of power converter

In the following description, a situation where it is presumed that the resonant current flowing through the U-phase switch 8U and the resonant current flowing through the V-phase switch 8V would overlap with each other in the resonant inductor L1 will be described as an example. The same statement applies to a combination of the U- and W-phases and a combination of the V- and W-phases as well.

### (2.1) Operation of soft-switching first switching element

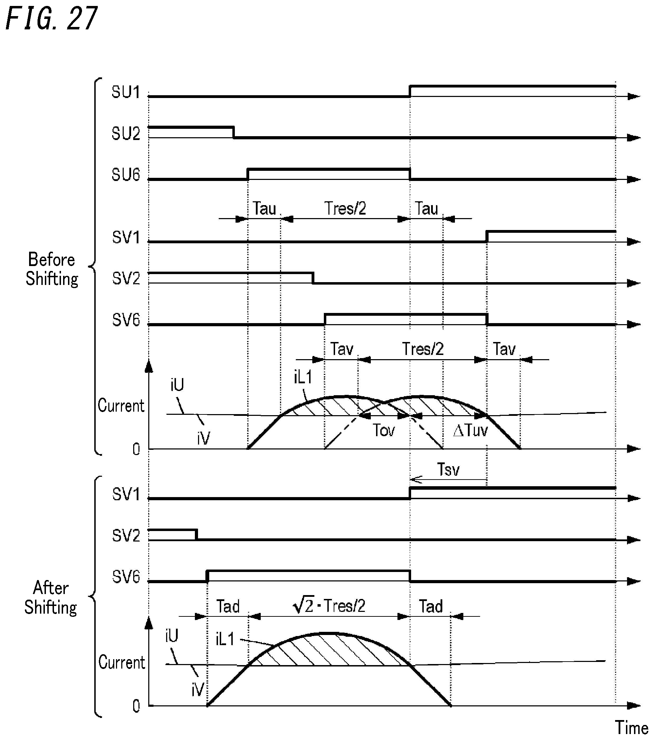

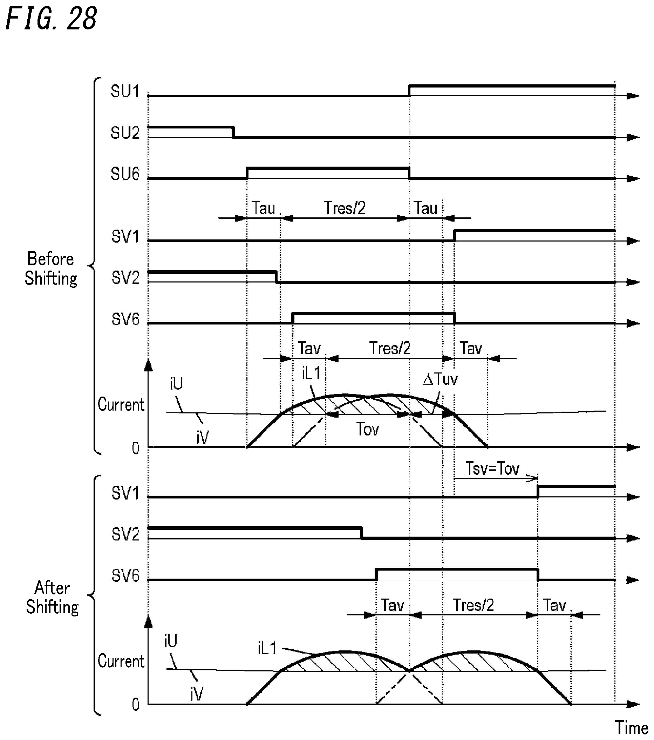

Next, it will be described with reference to FIGS. 27 and 28 how the power converter 100 according to the first example operates to soft-switch the first switching element 1. FIG. 27 is a timing chart illustrating how the power converter 100 according to the first example operates in a situation where its controller 50 performs the second control operation. FIG. 28 is a timing chart illustrating how the power converter 100 according to the first example operates in a situation where its controller 50 performs the first control operation. FIGS. 27 and 28 may be interpreted in the same way as in FIGS. 14 and 12, respectively, and therefore, description thereof will be omitted herein.

If the overlap period Tov is shorter than the time lag ΔTuv, then the controller 50 performs the second control operation.

In the example illustrated in FIG. 27, the time lag ΔTuv is longer than the overlap period Tov. When performing the second control operation, the controller 50 shifts, by the shifted time Tsv, the high-level period of each of the control signals SV1, SV2, SV6, SV7 in such a direction as to advance the end time of the high-level period of each of the control signals SV1, SV2, SV6, SV7. Thus, the controller 50 shifts, by the shifted time Tsv, the high-level period of the control signal SV1 in such a direction as to advance the beginning time of the high-level period of the control signal SV1. The shifted time Tsv is as long as ΔTuv.

In the power converter 100 according to the first example, the controller 50 performs the second control operation, thus allowing the first switching elements 1U, 1V to be subjected to zero-voltage soft switching as in the situation where the controller 50 performs the second control operation in the power converter 100 according to the first embodiment.

If the overlap period Tov is longer than the time lag ΔTuv, then the controller 50 performs the first control operation. In the example illustrated in FIG. 28, the time lag ΔTuv is shorter than the overlap period Tov. When performing the first control operation, the controller 50 shifts, by the shifted time Tsv, the high-level period of the control signal SV6 in such a direction as to postpone the end time of the high-level period of the control signal SV6. Thus, the controller 50 shifts, by the shifted time Tsv, the high-level period of the control signal SV1 in such a direction as to postpone the beginning time of the high-level period of the control signal SV1. The shifted time Tsv is as long as the overlap period Tov.

In the power converter 100 according to the first example, the controller 50 performs the first control operation, thus eliminating the overlap period Tov between the U-phase resonant current and the V-phase resonant current as shown in FIG. 28. This allows the first switching elements 1U, 1V to be subjected to zero-voltage soft switching.

### (2.2) Operation of soft-switching second switching element

When the controller 50 soft-switches the second switching element 2, the high-level period and low-level period of each of the control signals SU1, SU2, SV1, SV2 that have not been shifted yet invert and the polarities of the load currents iU, iV and the current iL1 reverse compared to a situation where the controller 50 soft-switches the first switching element 1. In addition, when soft-switching the second switching element 2, the controller 50 shifts the high-level period of the control signal SV7 in such a direction as to postpone the high-level period of the control signal SV7, instead of the control signal SV6.

In the power converter 100 according to the first example, the controller 50 performs either the first control operation or the second control operation, thus discharging electricity from the resonant capacitor 9U, 9V completely at a point in time when the dead time period corresponding to each of the U- and V-phases ends. Thus, in the power converter 100, if the controller 50 has performed either the first control operation or the second control operation, the second switching element 2U, 2V is subjected to zero-voltage soft switching.

### (3) Advantages

If the controller 50 has performed the first control operation, the power converter 100 according to the first example may reduce the peak value of the current iL1 flowing through the resonant inductor L1. On the other hand, if the controller 50 has performed the second control operation, then the power converter 100 according to the first example may contribute to increasing the operating frequency.

### (Second example)

### (1) Circuit configuration for power converter

The circuit configuration of a power converter 100 according to a second example is the same as that of the power converter 100 (refer to FIG. 1) according to the first embodiment described above, and therefore, illustration and description thereof will be omitted herein.

### (2) Operation of power converter

In the following description, a situation where it is presumed that the resonant current flowing through the U-phase switch 8U and the resonant current flowing through the V-phase switch 8V would overlap with each other in the resonant inductor L1 will be described as an example. The same statement applies to a combination of the U- and W-phases and a combination of the V- and W-phases as well.

### (2.1) Operation of soft-switching first switching element

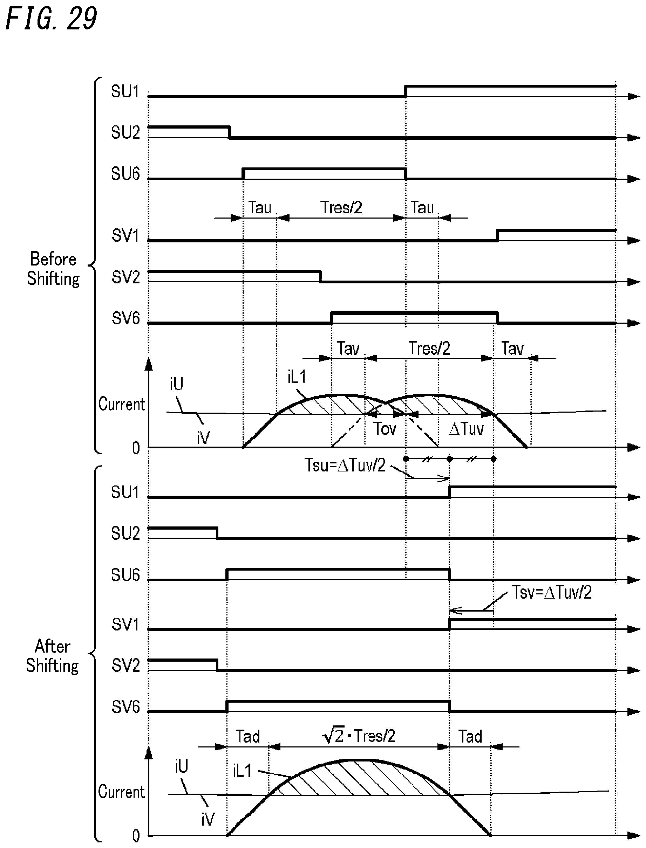

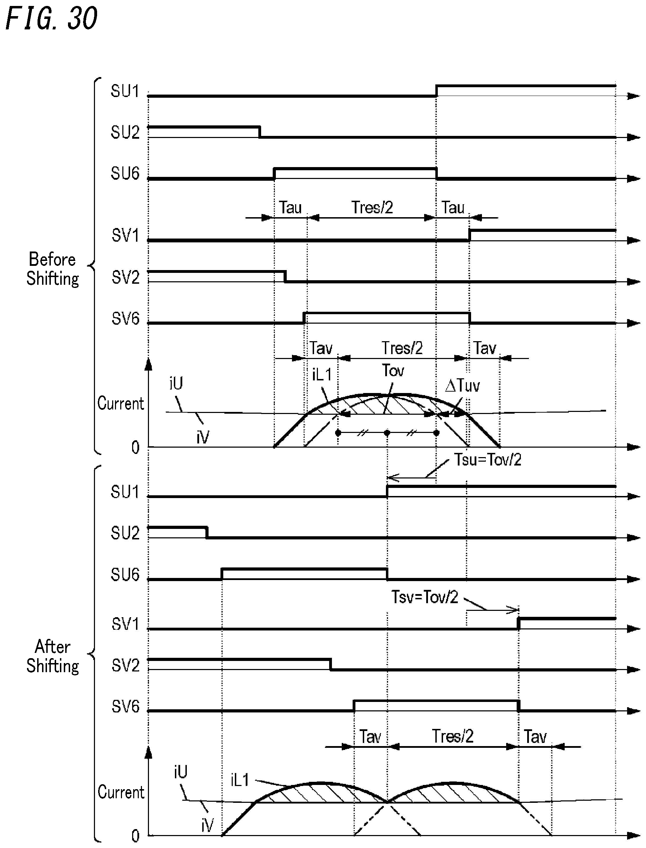

Next, it will be described with reference to FIGS. 29 and 30 how the power converter 100 according to the second example operates to soft-switch the first switching element 1. FIG. 29 is a timing chart illustrating how the power converter 100 according to the second example operates in a situation where its controller 50 performs the second control operation. FIG. 30 is a timing chart illustrating how the power converter 100 according to the second example operates in a situation where its controller 50 performs the first control operation. FIGS. 29 and 30 may be interpreted in the same way as in FIGS. 14 and 12, respectively, and therefore, description thereof will be omitted herein.

In the example illustrated in FIG. 29, the time lag ΔTuv is longer than the overlap period Tov. When performing the second control operation, the controller 50 shifts the respective high-level periods of the control signals SU6, SV6 in mutually opposite directions. The controller 50 shifts the high-level period of the control signal SU6 by the shifted time Tsu in such a direction as to postpone the end time of the high-level period of the control signal SU6 and shifts the high-level period of the control signal SV6 by the shifted time Tsv in such a direction as to advance the end time of the high-level period of the control signal SV6. Thus, the controller 50 shifts the high-level period of the control signal SU1 by the shifted time Tsu in such a direction as to postpone the beginning time of the high-level period of the control signal SU1. In addition, the controller 50 also shifts the high-level period of the control signal SV1 by the shifted time Tsv in such a direction as to advance the beginning time of the high-level period of the control signal SV1. The shifted time Tsu is as long as ΔTuv/2. The shifted time Tsv is also as long as ΔTuv/2.

In the power converter 100 according to the second example, the controller 50 performs the second control operation, thus allowing the first switching elements 1U, 1V to be subjected to zero-voltage soft switching as in the situation where the controller 50 performs the second control operation in the power converter 100 according to the first embodiment.

If the overlap period Tov is longer than the time lag ΔTuv, then the controller 50 performs the first control operation. In the example illustrated in FIG. 30, the time lag ΔTuv is shorter than the overlap period Tov. When performing the first control operation, the controller 50 shifts the respective high-level periods of the control signals SU6, SV6 in mutually opposite directions. The controller 50 shifts the high-level period of the control signal SU6 by the shifted time Tsu in such a direction as to advance the end time of the high-level period of the control signal SU6 and shifts the high-level period of the control signal SV6 by the shifted time Tsv in such a direction as to postpone the end time of the high-level period of the control signal SV6. Thus, the controller 50 shifts the high-level period of the control signal SU1 by the shifted time Tsu in such a direction as to advance the beginning time of the high-level period of the control signal SU1. In addition, the controller 50 also shifts the high-level period of the control signal SV1 by the shifted time Tsv in such a direction as to postpone the beginning time of the high-level period of the control signal SV1. The shifted time Tsu is as long as Tov/2. The shifted time Tsv is also as long as Tov/2.

In the power converter 100 according to the second example, the controller 50 performs the first control operation, thus eliminating the overlap period Tov between the U-phase resonant current and the V-phase resonant current as shown in FIG. 30. This allows the first switching elements 1U, 1V to be subjected to zero-voltage soft switching.

### (2.2) Operation of soft-switching second switching element

When the controller 50 soft-switches the second switching element 2, the high-level period and low-level period of each of the control signals SU1, SU2, SV1, SV2 that have not been shifted yet invert and the polarities of the load currents iU, iV and the current iL1 reverse compared to a situation where the controller 50 soft-switches the first switching element 1. In addition, when soft-switching the second switching element 2, the controller 50 shifts the respective high-level periods of the control signals SU7, SV7 in mutually opposite directions instead of the control signals SU6, SV6.

In the power converter 100 according to the second example, the controller 50 performs either the first control operation or the second control operation, thus discharging electricity from the resonant capacitor 9U, 9V completely at a point in time when the dead time period corresponding to each of the U- and V-phases ends. Thus, in the power converter 100, if the controller 50 has performed either the first control operation or the second control operation, the second switching element 2U, 2V is subjected to zero-voltage soft switching.

### (3) Advantages

If the controller 50 has performed the first control operation, the power converter 100 according to the second example may reduce the peak value of the current iL1 flowing through the resonant inductor L1. On the other hand, if the controller 50 has performed the second control operation, then the power converter 100 according to the second example may contribute to increasing the operating frequency.

### (Third example)

### (1) Circuit configuration for power converter

The circuit configuration of a power converter 100 according to a third example is the same as that of the power converter 100 (refer to FIG. 1) according to the first embodiment described above, and therefore, illustration and description thereof will be omitted herein.

### (2) Operation of power converter

In the following description, a situation where it is presumed that the resonant current flowing through the U-phase switch 8U and the resonant current flowing through the V-phase switch 8V would overlap with each other in the resonant inductor L1 will be described as an example. The same statement applies to a combination of the U- and W-phases and a combination of the V- and W-phases as well.

### (2.1) Operation of soft-switching first switching element

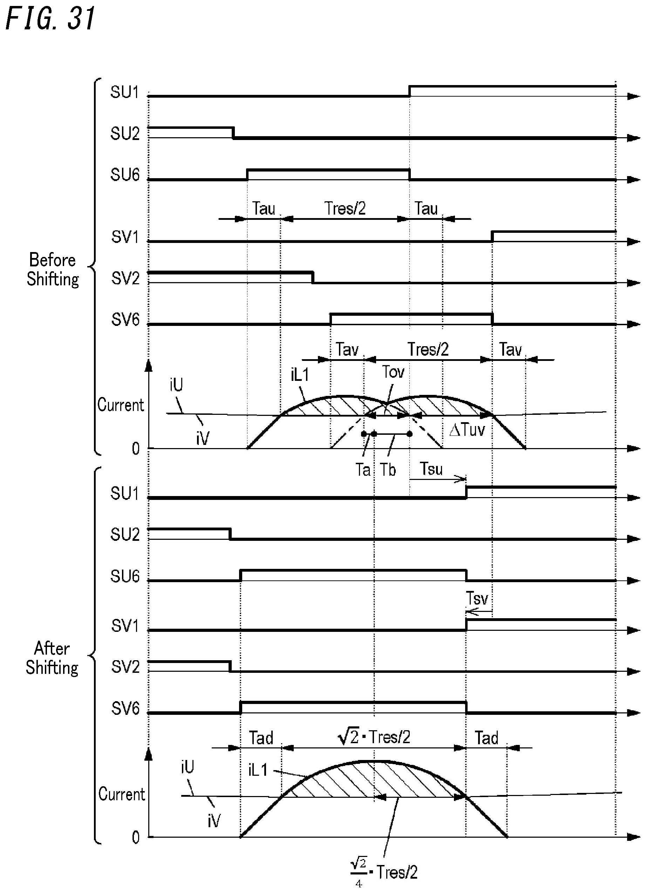

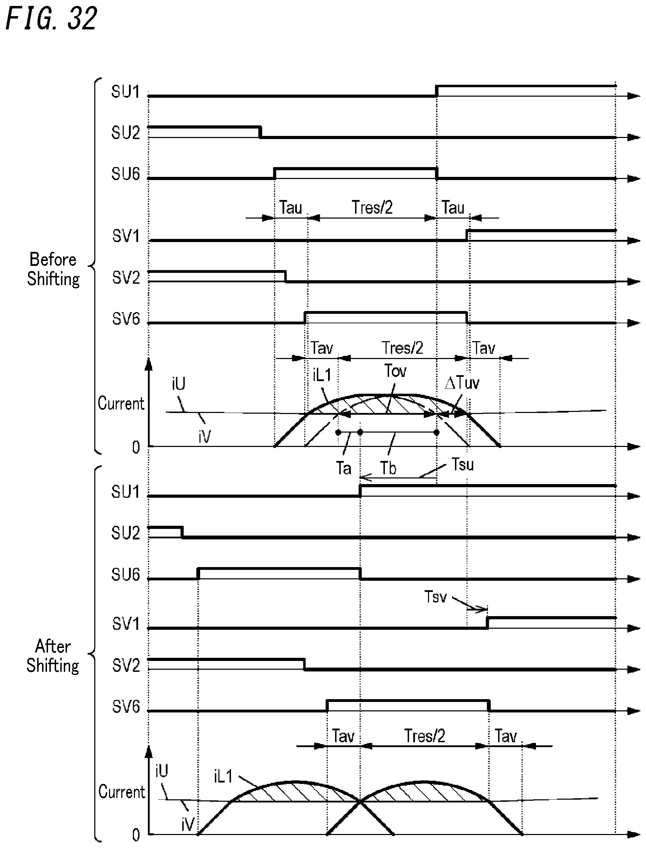

Next, it will be described with reference to FIGS. 31 and 32 how the power converter 100 according to the third example operates to soft-switch the first switching element 1. FIG. 31 is a timing chart illustrating how the power converter 100 according to the third example operates in a situation where its controller 50 performs the second control operation. FIG. 32 is a timing chart illustrating how the power converter 100 according to the third example operates in a situation where its controller 50 performs the first control operation. FIGS. 31 and 32 may be interpreted in the same way as in FIGS. 14 and 12, respectively, and therefore, description thereof will be omitted herein.

If the overlap period Tov is shorter than the time lag ΔTuv, then the controller 50 performs the second control operation. In the example illustrated in FIG. 31, the time lag ΔTuv is longer than the overlap period Tov. When performing the second control operation, the controller 50 shifts the respective high-level periods of the control signals SU6, SV6 in mutually opposite directions. The controller 50 shifts the high-level period of the control signal SU6 by the shifted time Tsu in such a direction as to postpone the end time of the high-level period of the control signal SU6 and shifts the high-level period of the control signal SV6 by the shifted time Tsv in such a direction as to advance the end time of the high-level period of the control signal SV6. Thus, the controller 50 shifts the high-level period of the control signal SU1 by the shifted time Tsu in such a direction as to postpone the beginning time of the high-level period of the control signal SU1. In addition, the controller 50 also shifts the high-level period of the control signal SV1 by the shifted time Tsv in such a direction as to advance the beginning time of the high-level period of the control signal SV1. If Tov = Ta + Tb, then the length of the shifted time Tsu is calculated by (√2/4)· Tres - Tov· Tb / (Ta + Tb). The shifted time Tsv has a length calculated by Tov· Tb / (Ta + Tb) + ΔTuv - (√2/4) · Tres. Note that each of Ta and Tb may be set at any suitable value.

In the power converter 100 according to the third example, the controller 50 performs the second control operation, thus allowing the first switching elements 1U, 1V to be subjected to zero-voltage soft switching as in the situation where the controller 50 performs the second control operation in the power converter 100 according to the first embodiment.

If the overlap period Tov is longer than the time lag ΔTuv, then the controller 50 performs the first control operation.

In the example illustrated in FIG. 32, the time lag ΔTuv is longer than the overlap period Tov. When performing the first control operation, the controller 50 shifts the respective high-level periods of the control signals SU6, SV6 in mutually opposite directions. The controller 50 shifts the high-level period of the control signal SU6 (of which the high-level period has a phase lead with respect to the other control signal SV6 out of the two control signals SU6, SV6 within one cycle of the carrier signal) by the shifted time Tsu in such a direction as to advance the end time of the high-level period of the control signal SU6 and shifts the high-level period of the control signal SV6 (of which the high-level period has a phase lag with respect to the other control signal SU6 within one cycle of the carrier signal) by the shifted time Tsv in such a direction as to postpone the end time of the high-level period of the control signal SV6. Thus, the controller 50 shifts the high-level period of the control signal SU1 by the shifted time Tsu in such a direction as to advance the beginning time of the high-level period of the control signal SU1. In addition, the controller 50 also shifts the high-level period of the control signal SV1 by the shifted time Tsv in such a direction as to postpone the beginning time of the high-level period of the control signal SV1. The shifted time Tsu has its length calculated by Tov·Tb / (Ta + Tb). On the other hand, the shifted time Tsv has its length calculated by Tov· Tb / (Ta + Tb).

In the power converter 100 according to the third example, the controller 50 performs the first control operation, thus eliminating the overlap period Tov between the U-phase resonant current and the V-phase resonant current which have not been subjected to shifting yet, as indicated in the lower part of FIG. 32 by the waveform of the current iL1 which has been subjected to shifting. This allows the first switching elements 1U, 1V to be subjected to zero-voltage soft switching.

### (2.2) Operation of soft-switching second switching element

When the controller 50 soft-switches the second switching element 2, the high-level period and low-level period of each of the control signals SU1, SU2, SV1, SV2 that have not been shifted yet invert and the polarities of the load currents iU, iV and the current iL1 reverse compared to a situation where the controller 50 soft-switches the first switching element 1. In addition, when soft-switching the second switching element 2, the controller 50 shifts the respective high-level periods of the control signals SU7, SV7 in mutually opposite directions, instead of the control signals SU6, SV6.

In the power converter 100 according to the third example, the controller 50 performs either the first control operation or the second control operation, thus discharging electricity from the resonant capacitor 9U, 9V completely at a point in time when the dead time period corresponding to each of the U- and V-phases ends. Thus, in the power converter 100, if the controller 50 has performed either the first control operation or the second control operation, the second switching element 2U, 2V is subjected to zero-voltage soft switching.

### (3) Advantages

If the controller 50 has performed the first control operation, the power converter 100 according to the third example may reduce the peak value of the current iL1 flowing through the resonant inductor L1. On the other hand, if the controller 50 has performed the second control operation, then the power converter 100 according to the third example may contribute to increasing the operating frequency.

### (Aspects)

The foregoing description provides specific implementations for the following aspects of the present disclosure.

A power converter (100; 100A; 100B; 100C; 100D; 100E; 100F; 100G; 100H) according to a first aspect includes a first DC terminal (31) and a second DC terminal (32), a power converter circuit (11), a plurality of AC terminals (41), a plurality of switches (8), a plurality of resonant capacitors (9), a resonant inductor (L1), a regenerative capacitor (15), and a controller (50). The power converter circuit (11) includes a plurality of first switching elements (1) and a plurality of second switching elements (2). In the power converter circuit (11), a plurality of switching circuits (10), in each of which one of the plurality of first switching elements (1) and a corresponding one of the plurality of second switching elements (2) are connected one to one in series, are connected to each other in parallel. In the power converter circuit (11), the plurality of first switching elements (1) are connected to the first DC terminal (31), and the plurality of second switching elements (2) are connected to the second DC terminal (32). The plurality of AC terminals (41) are provided one to one for the plurality of switching circuits (10). Each of the plurality of AC terminals (41) is connected to a connection node (3) between the first switching element (1) and the second switching element (2) of a corresponding one of the plurality of switching circuits (10). The plurality of switches (8) are provided one to one for the plurality of switching circuits (10). Each of the plurality of switches (8) has a first end (81) and a second end (82). Each of the plurality of switches (8) has the first end (81) thereof connected to the connection node (3) between the first switching element (1) and the second switching element (2) of a corresponding one of the plurality of switching circuits (10). The plurality of switches (8) have the respective second ends (82) thereof connected in common to a common connection node (25). The plurality of resonant capacitors (9) are provided one to one for the plurality of switches (8). Each of the plurality of resonant capacitors (9) is connected between the first end (81) of a corresponding one of the plurality of switches (8) and the second DC terminal (32). The resonant inductor (L1) has a first end and a second end. In the resonant inductor (L1), the first end of the resonant inductor (L1) is connected to the common connection node (25). The regenerative capacitor (15) has a third end (153) and a fourth end (154). In the regenerative capacitor (15), the third end (153) of the regenerative capacitor (15) is connected to either the first DC terminal (31) or the second DC terminal (32). The controller (50) applies a control signal, of which a potential level alternates between high level and low level, to each of the plurality of first switching elements (1), the plurality of second switching elements (2), and the plurality of switches (8). The controller (50) sets a dead time period (Td) between a high-level period of the control signal for the first switching element (1) and a high-level period of the control signal for the second switching element (2) with respect to each of the plurality of switching circuits (10). The controller (50) sets a high-level period of the control signal for each of the plurality of switches (8) based on the dead time period (Td) for a corresponding one of the plurality of switching circuits (10). The controller (50) is configured to, when determining that resonant currents, passing respectively through two or more switches (8) belonging to the plurality of switches (8), should be going to flow simultaneously through the resonant inductor (L1), perform either a first control operation or a second control operation based on an overlap period (Tov) in which the resonant currents passing respectively through the two or more switches (8) flow simultaneously. The first control operation is the operation of shifting the high-level period of the control signal for at least one switch (8) out of the two or more switches (8) to prevent the resonant currents passing respectively through the two or more switches (8) from flowing simultaneously through the resonant inductor (L1). The second control operation is the operation of shifting the high-level period of the control signal for at least one switch (8) out of the two or more switches (8) to cause the respective high-level periods of the control signals to be applied to the two or more switches (8), respectively, to overlap with each other for at least a predetermined period during a dead time period corresponding to each of two or more switching circuits (10) connected respectively to the two or more switches (8) which belong to the plurality of switching circuits (10).

This aspect allows for reducing the current distortion.

In a power converter (100; 100A; 100B; 100C; 100D; 100E; 100F; 100G; 100H) according to a second aspect, which may be implemented in conjunction with the first aspect, either the first switching element (1) or the second switching element (2) designated as a target of zero-voltage soft switching in one switching circuit (10) belonging to the two or more switching circuits (10) is supposed to be a "first target switching element." Either the first switching element (1) or the second switching element (2) designated as a target of zero-voltage soft switching in another switching circuit (10), other than the one switching circuit (10) including the first target switching element, belonging to the two or more switching circuits (10) is supposed to be a "second target switching element." A time lag between a beginning time of the high-level period of the control signal for the first target switching element and a beginning time of the high-level period of the control signal for the second target switching element is supposed to be ΔT. In that case, the controller (50) performs the first control operation when the overlap period (Tov) of the resonant currents is shorter than ΔT and performs the second control operation when the overlap period (Tov) of the resonant currents is equal to or longer than ΔT.

This aspect may reduce the magnitude of shift of the high-level period of the control signal and thereby reduce the current distortion.

In a power converter (100; 100A; 100B; 100C; 100D; 100E; 100F; 100G; 100H) according to a third aspect, which may be implemented in conjunction with the second aspect, one of the two or more switches (8) is supposed to be a "first switch" and another one of the two or more switches (8) which is different from the first switch is supposed to be a "second switch." In that case, when performing the first control operation, the controller (50) shifts the high-level period of the control signal for at least one of the first switch or the second switch to cause a resonant current passing through the second switch to start flowing from a point in time when a current value of the resonant current passing through the first switch agrees with a current value of a load current flowing through an AC terminal (41) corresponding to the first switch which belongs to the two or more AC terminals (41) after the current value of the resonant current passing through the first switch has reached an extreme value.

This aspect may reduce the magnitude of shift of the high-level period of the control signal and thereby contribute to increasing the operating frequency.

In a power converter (100; 100A; 100B; 100C; 100D; 100E; 100F; 100G; 100H) according to a fourth aspect, which may be implemented in conjunction with the third aspect, when performing the first control operation, the controller (50) shifts the high-level period of the control signal for the first switch and the high-level period of the control signal for the second switch in mutually different directions.

This aspect may further reduce the magnitude of shift of the high-level period of the control signal and thereby further reduce the current distortion.

In a power converter (100; 100A; 100B; 100C; 100D; 100E; 100F; 100G; 100H) according to a fifth aspect, which may be implemented in conjunction with the first or second aspect, the predetermined period is the entirety of a resonant half cycle of a resonant circuit. The resonant circuit includes the resonant inductor (L1) and two or more resonant capacitors (9) belonging to the plurality of resonant capacitors (9). The two or more resonant capacitors (9) are connected respectively to the two or more switches (8). The controller (50) is ready to perform a third control operation of making the high-level period of the control signal for each of the two or more switches (8) longer than the predetermined period by an additional time (Tad). The controller (50) performs the third control operation when performing the second control operation.

### Industrial Applicability

A power converter according to the present disclosure may reduce the current distortion. This allows for producing AC power with current distortion reduced when DC power is converted into AC power by the power converter according to the present disclosure. As can be seen, the power converter according to the present disclosure is effectively applicable to various fields on an industrial basis.

### Reference Signs List

1, 1U, 1V, 1W First Switching Element
2, 2U, 2V, 2W Second Switching Element
3, 3U, 3V, 3W Connection Node
8, 8U, 8V, 8W Switch
9, 9U, 9V, 9W Resonant Capacitor
10, 10U, 10V, 10W Switching Circuit
11 Power Converter Circuit
15 Regenerative Capacitor
153 Third End
154 Fourth End
31 First DC Terminal
32 Second DC Terminal
41, 41U, 41V, 41W AC Terminal
50 Controller
100, 100A, 100B, 100C, 100D, 100E, 100F, 100G, 100H Power Converter
iU, iV, iW Output Current (Load Current)
L1 Resonant Inductor
RA1 AC Load
SU1, SU2, SU6, SU7, SU8 Control Signal
SV1, SV2, SV6, SV7, SV8 Control Signal
SW1, SW2, SW6, SW7, SW8 Control Signal
Tad, Tau, Tav, Taw Additional Time
Tres Resonant Half Cycle
Tov Overlap Period
V15 Voltage (Potential)

## Claims

1. A power converter comprising:
a first DC terminal and a second DC terminal;
a power converter circuit including a plurality of first switching elements and a plurality of second switching elements, the power converter circuit being implemented as a parallel connection of a plurality of switching circuits in each of which one of the plurality of first switching elements and a corresponding one of the plurality of second switching elements are connected one to one in series, the plurality of first switching elements being connected to the first DC terminal, the plurality of second switching elements being connected to the second DC terminal;
a plurality of AC terminals provided one to one for the plurality of switching circuits, each of the plurality of AC terminals being connected to a connection node between the first switching element and the second switching element of a corresponding one of the plurality of switching circuits;
a plurality of switches provided one to one for the plurality of switching circuits, each of the plurality of switches having a first end and a second end, each of the plurality of switches having the first end thereof connected to the connection node between the first switching element and the second switching element of a corresponding one of the plurality of switching circuits, the plurality of switches having the respective second ends thereof connected in common to a common connection node;
a plurality of resonant capacitors provided one to one for the plurality of switches, each of the plurality of resonant capacitors being connected between the first end of a corresponding one of the plurality of switches and the second DC terminal;
a resonant inductor having a first end and a second end, the first end of the resonant inductor being connected to the common connection node;
a regenerative capacitor having a third end and a fourth end, the third end of the regenerative capacitor being connected to either the first DC terminal or the second DC terminal; and
a controller configured to apply a control signal, of which a potential level alternates between high level and low level, to each of the plurality of first switching elements, the plurality of second switching elements, and the plurality of switches,
the controller being configured to set a dead time period between a high-level period of the control signal for the first switching element and a high-level period of the control signal for the second switching element with respect to each of the plurality of switching circuits, the controller being configured to set a high-level period of the control signal for each of the plurality of switches based on the dead time period for a corresponding one of the plurality of switching circuits,
the controller being configured to, when determining that resonant currents, passing respectively through two or more switches belonging to the plurality of switches, be going to flow simultaneously through the resonant inductor, perform either a first control operation or a second control operation based on an overlap period in which the resonant currents passing respectively through the two or more switches flow simultaneously,
the first control operation being an operation of shifting the high-level period of the control signal for at least one switch out of the two or more switches to prevent the resonant currents passing respectively through the two or more switches from flowing simultaneously through the resonant inductor, and
the second control operation being an operation of shifting the high-level period of the control signal for at least one switch out of the two or more switches to cause the respective high-level periods of the control signals to be applied to the two or more switches, respectively, to overlap with each other for at least a predetermined period during a dead time period corresponding to each of two or more switching circuits connected respectively to the two or more switches which belong to the plurality of switching circuits.

2. The power converter of claim 1, wherein
supposing either the first switching element or the second switching element designated as a target of zero-voltage soft switching in one switching circuit belonging to the two or more switching circuits is a first target switching element;
either the first switching element or the second switching element designated as a target of zero-voltage soft switching in another switching circuit, other than the one switching circuit including the first target switching element, belonging to the two or more switching circuits is a second target switching element; and
a time lag between a beginning time of the high-level period of the control signal for the first target switching element and a beginning time of the high-level period of the control signal for the second target switching element is ΔT,
the controller is configured to
perform the first control operation when the overlap period of the resonant currents is shorter than ΔT, and
perform the second control operation when the overlap period of the resonant currents is equal to or longer than ΔT.

3. The power converter of claim 2, wherein
supposing one of the two or more switches is a first switch and another one of the two or more switches which is different from the first switch is a second switch,
the controller is configured to, when performing the first control operation, shift the high-level period of the control signal for at least one of the first switch or the second switch to cause a resonant current passing through the second switch to start flowing from a point in time when a current value of the resonant current passing through the first switch agrees with a current value of a load current flowing through an AC terminal corresponding to the first switch which belongs to the two or more AC terminals after the current value of the resonant current passing through the first switch has reached an extreme value.

4. The power converter of claim 3, wherein
the controller is configured to, when performing the first control operation, shift the high-level period of the control signal for the first switch and the high-level period of the control signal for the second switch in mutually different directions.

5. The power converter of claim 1 or 2, wherein
the predetermined period is entirety of a resonant half cycle of a resonant circuit, the resonant circuit including the resonant inductor and two or more resonant capacitors belonging to the plurality of resonant capacitors, the two or more resonant capacitors being connected respectively to the two or more switches,
the controller is configured to be ready to perform a third control operation of making the high-level period of the control signal for each of the two or more switches longer than the predetermined period by an additional time, and
the controller is configured to perform the third control operation when performing the second control operation.
